# EUROPEAN PATENT SPECIFICATION

(11) **EP 2 471 993 B1**
(45) Date of publication and mention of the grant of the patent: **30.10.2019**
(21) Application number: 10811662.5
(22) Date of filing: 02.08.2010
(51) Int. Cl.: D06F 39/08, D06F 23/06, D06F 33/02

(54) **DRUM TYPE WASHING MACHINE**
TROMMELWASCHMASCHINE
MACHINE À LAVER DU TYPE À TAMBOUR

(30) Priority: 24.08.2009 JP 2009193046; 11.09.2009 JP 2009210415
(43) Date of publication of application: 04.07.2012
(73) Proprietor: Toshiba Lifestyle Products & Services Corporation, Ome-shi, Tokyo 198-8710 (JP)
(72) Inventor: TAKAI, Yuji, Tokyo 105-8001 (JP); NISHIWAKI, Satoru, Tokyo 105-8001 (JP); NISHIMURA, Yoshimi, Tokyo 105-8001 (JP); IWAI, Shogo, Tokyo 105-8001 (JP)
(74) Representative: Haseltine Lake Kempner LLP
(86) International application number: PCT/JP2010/063018
(87) International publication number: WO 2011/024611

(56) References cited:
- EP-A1- 2 009 165
- EP-A2- 1 679 401
- WO-A1-97/15709
- DE-A1- 3 825 500
- DE-A1- 3 825 502
- DE-A1- 4 236 873
- DE-A1- 10 227 958
- DE-A1- 19 962 257
- JP-A- 7 171 288
- JP-A- 2006 192 249
- JP-A- 2006 239 141
- JP-A- 2009 056 113
- KR-A- 20020 030 585
- US-A- 3 388 410
- DATABASE WPI Section EI, Week 200661 Thomson Scientific, London, GB; Class X27, AN 2006-591930 XP002690108, -& KR 2005 0121052 A (SAMSUNG ELECTRONICS CO LTD) 26 December 2005 (2005-12-26)

## Description

### Technical Field

Embodiments described herein relate to a drum type washing machine provided with a circulation path which circulates wash liquid in a water tub.

### Background Art

A drum type washing machine generally includes a bottomed cylindrical water tub with a closed rear side. The water tub is elastically supported in an outer casing so that a central axis thereof is located along an axis line which descends obliquely downwards. A drum is mounted in the water tub so as to be rotatable by a washing machine motor. The drum has an inner circumferential part on which a plurality of baffles is provided for scooping up or lifting laundry upward. The baffles are constructed so as to extend straight in a front-back direction with respect to the water tub, for example. Wash liquid that is water mixed with a detergent or the like is stored in the water tub in a wash step. Upon rotation of the drum, clothes or laundry containing wash liquid is scooped or lifted upward and then caused to fall downward, whereby the clothes are washed by a beat wash manner.

It is important that the laundry should be sufficiently permeated with wash liquid containing a detergent before the laundry is caused to fall downward. For this purpose, a construction is proposed in which a circulation path having a circulation pump is provided so that wash liquid is drawn out of the bottom of the water tub to be discharged from an upper part of the water tub into the drum. This construction can realize forced permeation by sprinkling of wash liquid from the circulation path into the drum other than spontaneous penetration of wash liquid while the laundry is located on the drum bottom.

### Prior Art Documents

### Patent Documents

Patent Document 1: JP-A-2008-113982
Patent Document 2: JP-A-H09-215891

### Summary of the Invention

### Problem to be Overcome by the Invention

In the conventional construction, the water tub is elastically supported in the outer casing so that the central axis thereof is located along the axis line which descends obliquely downwards. Accordingly, the wash liquid tends to easily remain in corners at the rear side of the water tub such that a water level can be increased by a smaller amount of wash liquid. However, the drum is mounted so as to be rotatable about the axis line thereof. Accordingly, the baffles are also inclined so as to descend obliquely downward toward the rear side, whereupon laundry scooped upward with rotation of the drum is moved to the rear side thereby to be eccentrically located in the rear side of the drum interior. As a result, it is difficult to uniformly permeate the whole laundry with washing liquid when the wash liquid is only sprinkled from the upper part of the water tub into the drum by the circulation path as in the conventional washing machine. There is accordingly a possibility that a sufficient washing effect cannot be obtained from the beat wash of laundry. This results in reduction in the efficiency of a washing operation. A similar reduction in the efficiency to the above-described also occurs in a rinsing operation.

In the conventional construction, furthermore, the liquid to be discharged from an external circulation path into the upper interior of the water tub is caused to collide with a deflection plate mounted at an access opening of the water tub thereby to be sprayed into the drum. This construction, however, results in troublesome arrangement of the circulation path as well as a bulk circulation path. Moreover, the deflection plate protrudes into the access opening of the water tub in the construction that the deflection plate is mounted at the access opening of the water tub. Accordingly, the deflection plate stands in the way of laundry to be put into and taken out of the drum. Additionally, the mounting of the deflection plate requires a number of components, complicating the mounting structure.

EP 1 679 401 discloses a drum washing machine that includes a cabinet forming an external housing of the washing machine, and a tub that is installed in the cabinet for containing washing water. EP 1 679 401 further discloses a circulation pump for pumping the washing water in the tub and re-supplying the washing water to the inside of a drum.

KR 2005 0121052 A discloses a washing machine that sprinkles water in the laundry evenly and entirely by mounting plural water supply nozzles in a washtub, whereby a second water supply pipe is divided into a first branch pipe extended to an upper part of a left side of a water tub, and a second branch pipe extended to an upper part of a right side of the water tub, and whereby a first water supply nozzle and a second water supply nozzle are installed at ends of the first and second branch pipes respectively. WO 97/15709 discloses a washing machine containing a fixed outer drum, an inner drum mounted therein in a rotatable manner and provided with openings. US 3 388 410 discloses a machine for cleaning clothes in which a cleaning chamber is rotated at a relatively high speed so that the clothes and cleaning solution form and maintain an annular layer in the chamber about the axis of rotation of the chamber. KR 2002 0030585 relates to a recycling system of a washing machine, and describes that an inner tub of a drum washing machine is implemented such that the rotating shaft may be inclined by a predetermined amount from a horizontal direction with respect to the ground for convenience of drawing. KR 2002 0030585 also describes a pump installed in a drainage passage for draining water used for washing through a drainage passage or recirculated through a recycle passage to a nozzle provided at an upper front side portion of the water tub. DE 42 36 873 relates to a method for washing laundry with a wash liquor, and describes a pump, where the pump is controlled in such a way that, during a washing process, a drum is thrown in time intervals and at the same time, the pump pumps the washing liquor into the circulation in the drum.

Therefore, a first object is to provide a drum type washing machine which can uniformly permeate wash liquid into the entire laundry by use of a circulation path and which can efficiently execute washing and rinsing operations.

A second object is to provide a drum type washing machine which has the construction that wash liquid is discharged from the circulation path into the drum and which has nothing to stand in the way of laundry, the smaller number of components and a simpler structure.

### Means for Overcoming the Problem

A drum type washing machine of one embodiment includes an outer casing, a water tub, a drum, a washing machine motor, a baffle, a water intake, a first water discharge outlet and a second water discharge outlet, a circulation path, a circulation pump and a control unit.

The water tub is formed into a bottomed cylindrical shape with a closed rear side and is elastically supported so that a central axis thereof is located on an axis line descending downwardly rearward in the outer casing. The drum is provided in the water tub so as to be rotatable about the axis line and formed into a bottomed cylindrical shape having a closed rear side. The drum has a circumferential wall with a number of holes. The washing machine motor is provided on an outer rear surface of the water tub to drive the drum in a normal rotation direction and a reverse rotation direction. The baffle is provided on an inner circumference of the drum so as to extend in a front-back direction along the axis line. The water intake is formed in a rear side bottom of the water tub. The first water outlet and the second water outlet are both formed in a front side upper portion of the water tub. The circulation path connects the water intake, the first and second water outlets to one another. The circulation pump is provided in the circulation path to discharge water supplied from the water intake into the drum through the first and second water outlets. The control unit controls the washing machine motor and the circulation pump. In the washing machine, the first and second water outlets are configured so that a fall position of water from the second water outlet is located nearer a rear side than a fall position of water from the first water outlet and the second water outlet has a discharge flow rate that is set to be larger than a discharge flow rate of the first water outlet.

Deleted.

### BRIEF DESCRIPTION OF THE DRAWINGS

[FIG. 1] A longitudinally sectional side view of an entire drum type washing machine according to a first embodiment;
[FIG. 2] A partially broken perspective view of the drum type washing machine;
[FIG. 3] A partially developed plan view of a drum;
[FIG. 4] A rear view of a water tub cover;
[FIG. 5] A sectional view taken along line 5-5 in FIG. 4
[FIG. 6] A sectional view taken along line 6-6 in FIG. 4;
[FIG. 7] A sectional view taken along line 7-7 in FIG. 4;
[FIG. 8] A sectional view taken along line 8-8 in FIG. 4;
[FIG. 9] A view showing a first water discharge outlet as viewed in the direction of arrow E in FIG. 4;
[FIG. 10] A view showing a second water discharge outlet as viewed in the direction of arrow F in FIG. 4;
[FIG. 11] A block diagram showing an electrical arrangement;
[FIG. 12] A schematic rear view of the drum for explanation of operation;
[FIG. 13] A schematic view of the drum for explanation of operation;
[FIG.14] A time chart for explanation of operation (No. 1) ;
[FIG. 15] A time chart for explanation of operation (No. 2) ;
[FIG. 16] A time chart for explanation of operation (No. 3) ;
[FIG. 17] A flowchart for explanation of operation;
[FIG. 18] A graph showing the relationship between an amount of laundry and a permeability of washing liquid;
[FIG. 19] A graph showing current characteristics of a pump motor;
[FIG. 20] A flowchart showing a second embodiment;
[FIG. 21] A time chart showing a third embodiment;
[FIG. 22] A longitudinally sectional side view of an entire drum type washing machine according to a fourth embodiment;
[FIG. 23] A perspective view of internal constitution of the drum type washing machine;
[FIG. 24] An enlarged longitudinal section of an upper front of the water tub;
[FIG. 25] A front view of the water tub in which a drum is accommodated;
[FIG. 26] An enlarged rear view of an upper portion of the water discharging mechanism;
[FIG. 27] A rear view of a water tub cover;
[FIG. 28A] A rear view of a water pouring cover;
[FIG. 28B] A front view of the water pouring cover;
[FIG. 29] A sectional view taken along line 29-29 in FIG. 27;
[FIG. 30] An enlarged view of a part as shown by reference symbol X in FIG. 29;
[FIG. 31] A sectional view taken along line 31-31 in FIG. 27;
[FIG. 32] An enlarged view of a part as shown by reference symbol Y in FIG. 31;
[FIG. 33] A sectional view taken along line 33-33 in FIG. 27;
[FIG. 34] A view similar to FIG. 29, showing a fifth embodiment; and
[FIG. 35] A view similar to FIG. 31.

### EMBODIMENTS FOR CARRYING OUT THE INVENTION

Embodiments of the drum type washing machine will be described with reference to the accompanying drawings. Substantially the same components in each embodiment are labeled by the same reference symbols throughout the embodiments and a second or subsequent description of these components will be eliminated.

### (First Embodiment)

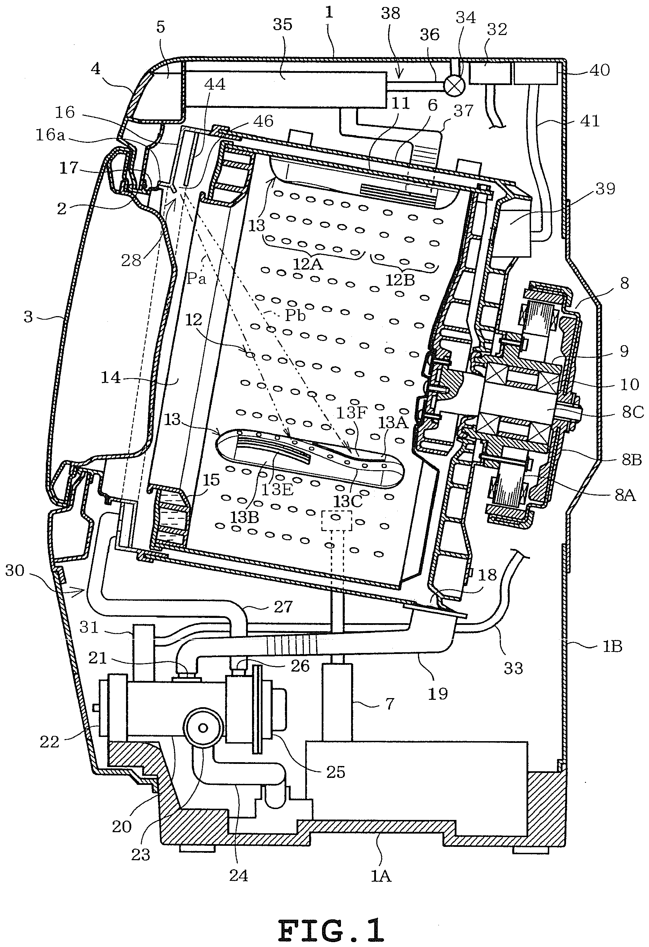

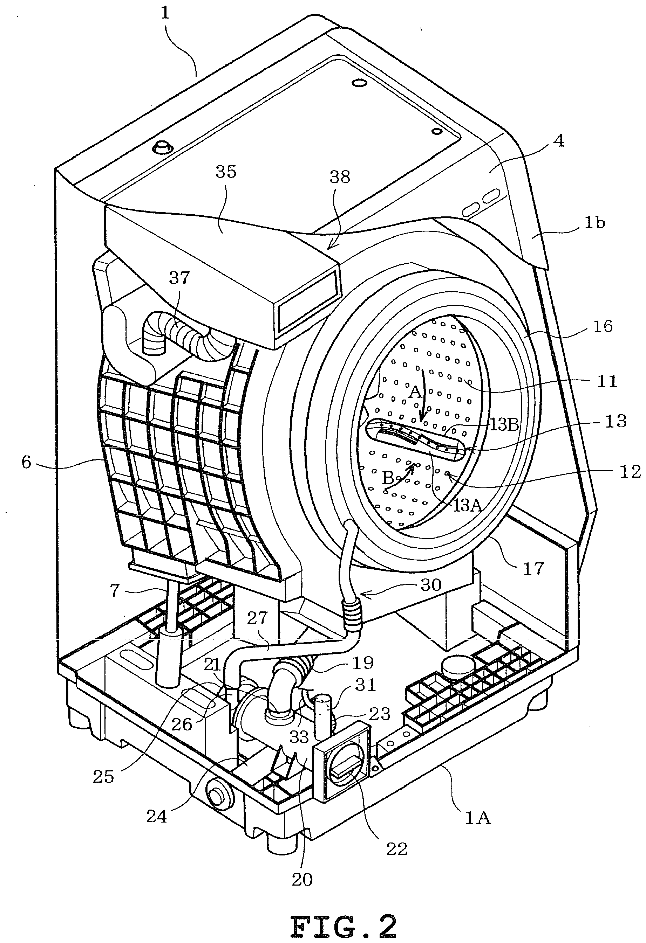

A first embodiment will be described with reference to FIGS. 1 to 19. Referring firstly to FIGS. 1 and 2, an entire structure of the drum type washing machine is shown. The drum type washing machine includes an outer casing 1 which is constituted by a base 1A made of a synthetic resin and casing body 1B connected to the base 1A. The casing body 1B has a front (a left side as viewed in FIG. 1) formed with a laundry access opening 2 located substantially at a central part of the front. A door 3 having a double-glazed structure opens and closes the laundry access opening 2. An operation panel 4 is mounted on an upper front of the casing body 1B. The operation panel 4 has a back (in the outer casing 1) where a control device 5 serving as a control unit is provided.

A water tub 6 formed into a bottomed cylindrical shape is provided in the outer casing 1. The water tub 6 has a closed rear side. The water tub 6 is elastically supported by a suspension 7 in the outer casing 1 so that a central axis thereof is located on an axis line that descends rearward (rightward in FIG. 1).

A washing machine motor 8 is mounted on the rear of the water tub 6. The washing machine motor 8 comprises a brushless DC motor, for example and is constructed into an outer rotor type. The washing machine motor 8 has a stator 8A and a rotor 8B. The stator
8A is mounted on the rear of the water tub 6 and the rotor 8B has a central rotating shaft 8C which is supported via bearings 10 on a bearing bracket 9 and inserted into an interior of the water tub 6.

A drum 11 formed into a bottomed cylindrical shape is mounted in the water tub 6. The drum 11 has a closed rear side and has a central rear connected to a distal end of the rotating shaft 8C of the washing machine motor 8. The drum 11 is rotatable about an axis line of the water tub 6 and is driven by the washing machine motor 8 in a normal direction and a reverse direction. In this case, the washing machine motor 8 serves as a drive device for rotating the drum 11.

The drum 11 has a circumferential wall (a barrel) formed with a number of holes 12 over an entire area thereof. In this case, the number of the holes 12 is set so that the number of the holes 12A formed in a front side half (a front half) of the drum 11 or a frontward region of the drum 11 with respect to a central part of the drum 11 in the front-back direction is larger than the number of the holes 12B formed in a rear side half of the drum 11 (a rear half) of the drum 11 or a rearward region of the drum 11 with respect to the central part of the drum 11 in the front-back direction. Furthermore, the drum 11 has an inner circumference formed with a plurality of (for example, three) baffles 13 which are provided for scooping up or lifting laundry upward and circumferentially arranged at regular intervals. The baffles 13 will be described in detail later.

Both the drum 11 and the water tub 6 have respective open fronts. For example, a liquid-encapsulated rotation balancer 15 is mounted on a circumferential inside of a front opening 14 of the drum 11. A water tub cover 16 is attached to a front opening of the water tub 6. The water tub cover 16 has a distal end opening 16a which is connected to the laundry access opening 2 by a bellows 17 made of an annular elastic material such as rubber. As a result, the laundry access opening 2 communicates with an interior of the drum 11 via the bellows 17, the water tub cover 16 and the opening 14 of the drum 11.

A drain outlet 18 which also serves as a water intake is formed through a lower end of the bottom of the water tub 6. One of two ends of an inner drain hose 19 is connected to the drain outlet 18. The other end of the inner drain hose 19 is connected to an inner drain hose connecting port 21 of a filter case 20 mounted on a front part of the base 1A of the outer casing 1.

The filter case 20 has an upper part in which the inner drain hose connecting port 21 is formed and a front end to which a cap 22 is attached. A lint filter (not shown) integral with the cap 22 is accommodated in the filter case 20. Furthermore, a drain valve 23 is connected to a lower part of the filter case 20. The drain valve 23 has an outlet to which a drain pipe 24 is connected. The drain pipe 24 has a distal end which is connected to an outer drain hose (not shown), while facing the outside of the washing machine.

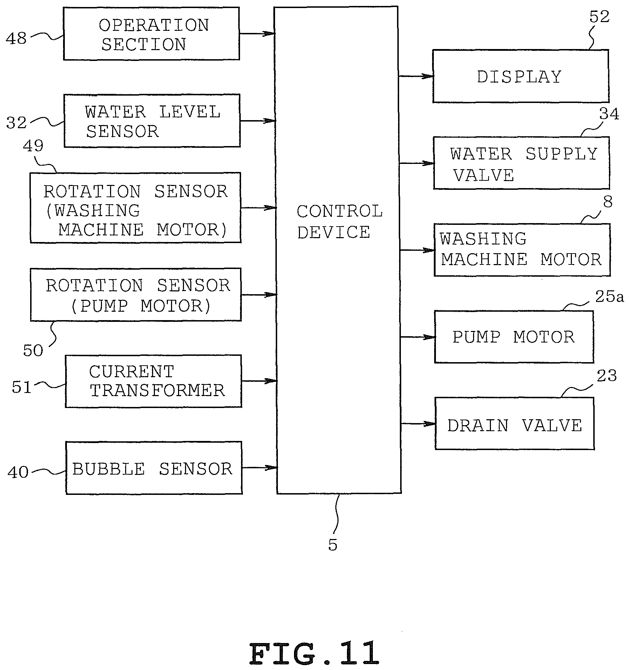

The filter case 20 has a rear end on which a circulation pump 25 is mounted. The circulation pump 25 draws water in the water tub 6 (the drum 11) through the drain outlet 18, the inner drain hose 19 and the filter case 20. The circulation pump 25 which is provided with a pump motor 25a as shown in FIG. 11 has an outlet 26 formed in the circumferential wall thereof. A water hose 27 has one end connected to the outlet 26. The water hose 27 also has a middle part extending upward from a lower circumferential side of the water tub cover 16 and a distal end connected to a watering mechanism 28. The watering mechanism 28 is configured to sprinkle the interior of the drum 11 with water as will be described later. As a result, a circulation path 30 is formed so as to connect the drain outlet 18 and the watering mechanism 28 to each other. More specifically, the circulation path 30 is defined by the water tub 6, the drum 11, the drain outlet 18, the inner drain hose 19, the filter case 20, the water hose 27 and the watering mechanism 28. Furthermore, the circulation pump 25 is located in the circulation path 30. Upon drive, the circulation pump 25 discharges (sprays) water taken out of the drain outlet 18 of the water tub 6 from the watering mechanism 28 into the drum 11 in a showering manner.

An air trap 31 is mounted on a frontward top of the filter case 20. The air trap 31 is connected by an air tube 33 to a water level sensor 32 mounted on the inner top of the outer casing 1. As a result, the water level sensor 32 functions as a water level detection unit which detects a water level in the water tub 6 via the inner drain hose 19, the filter case 20, the air trap 31 and the air tube 33.

A water supply valve 34 and a water supply case 35 are mounted in a top interior of the outer casing 1. The water supply valve 34 has an inlet to which an outer water supply hose (not shown) connected to a faucet of water supply system (not shown) is further connected. The water supply valve 34 also has an outlet to which one of two ends of a connecting pipe 36 is connected. The other end of the connecting pipe 36 is connected to the water supply case 35. The water supply case 35 has a detergent reservoir (not shown). One of two ends of an inner water supply hose 37 is connected to the water supply case 35. The other end of the inner water supply hose 37 is connected to an upper part of the water tub 6. As a result, water supplied from the water supply system through the water supply valve 34 is supplied through the connecting pipe 36, the detergent reservoir and the inner water supply hose 37 into the water tub 6. Furthermore, the water supply valve 34 and the water supply case 35 constitute a water supply device 38 supplying water into the water tub 6.

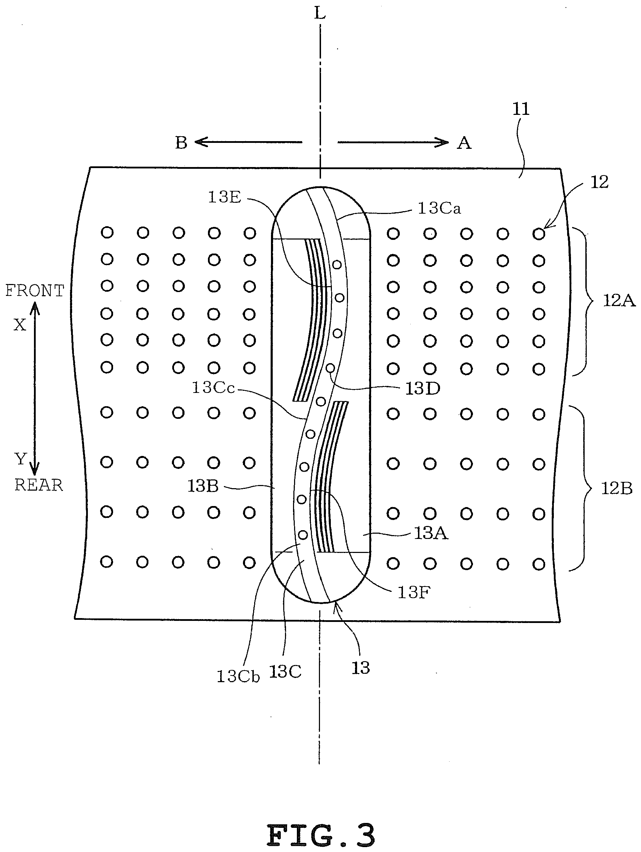

Referring now to FIGS. 1 to 3, the above-described baffles 13 extend in a front-back direction along an axis of the water tub 6, protruding toward a central axis of rotation of the drum 11. Each baffle 13 is formed into an angle shape having both side surfaces 13A and 13B rising toward a central ridge 13C formed with a plurality of holes 13D. In this case, the side 13A is referred to as a clockwise side (in the direction of arrow A in FIGS. 2 and 3, for example) as viewed at the front of the drum type washing machine. Also, the side surface 13B is referred to as a counter-clockwise side (in the direction arrow B in FIGS. 2 and 3, for example) as viewed at the front of the drum type washing machine.

The central ridge 13C of each baffle 13 has a generally curved shape such as a sine wave as viewed in a planar direction. More specifically, the central ridge 13C is divided into three lengthwise arranged regions, that is, a first rib 13Ca, a second rib 13Cb and a third rib 13Cc. The first rib 13Ca is located at one circumferential side with respect to a line L (see FIG. 3) extending along the axis line of the water tub 6 (the side located in the direction of arrow A as viewed at the front of the drum type washing machine) and further located at the front side of the drum 11. The second rib 13Cb is located at the other circumferential side with respect to the line L (the side located in the direction of arrow B as viewed at the front of the drum type washing machine) and further located at the rear side of the drum 11. The third rib 13Cc is located between the first and second ribs 13Ca and 13Cb. The first and second ribs 13Ca and 13Cb are connected together into the shape of a smooth curved line. The second and third ribs 13Cb and 13Cc are also connected together into the shape of a smooth curved line. A first recess 13E is formed by the first and third ribs 13Ca and 13Cb. A second recess 13F is formed by the second and third ribs 13Cb and 13Cc so as to be oppositely directed relative to the first recess 13E. The first recess 13E is curved so that a lower part thereof (a counter-clockwise side) is open. The second recess 13F is curved so that an upper part thereof (a clockwise side) is open.

An air trap 39 is mounted on the upper rear of the water tub 6 so as to communicate with the interior of the water tub 6 as shown in FIG. 1. The air trap 39 is connected by an air tube 41 to a bubble sensor 40 provided in the top interior of the outer casing 1. The bubble sensor 40 comprises a pressure switch. Bubbles produced in the water tub 6 reach the air trap 39. The bubbles expand and contract with rotation of the rum 11 such that the pressure in the air trap 39 changes. The bubble sensor 40 detects pressure changes thereby to detect an amount of bubbles.

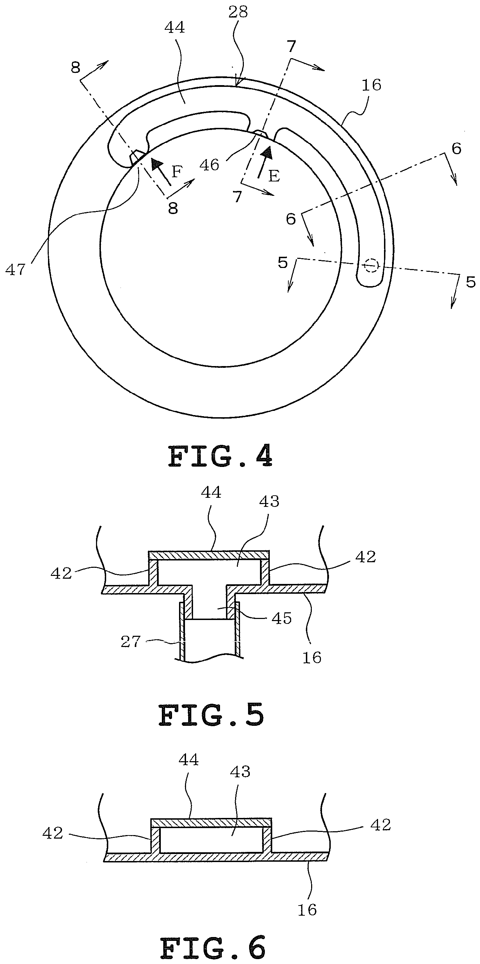

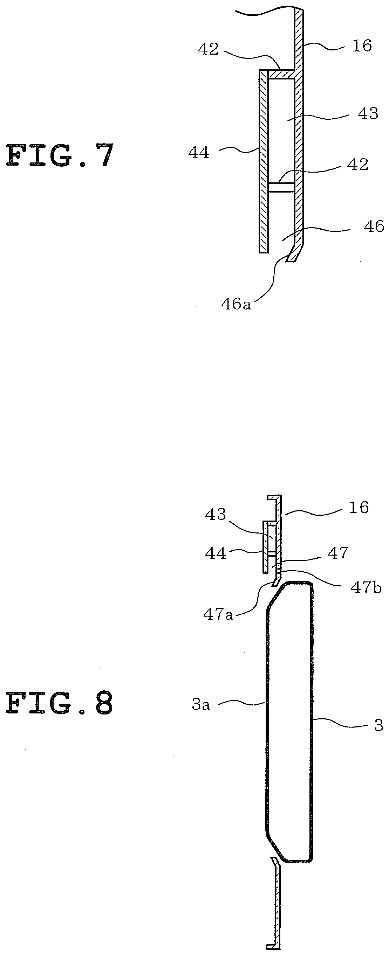

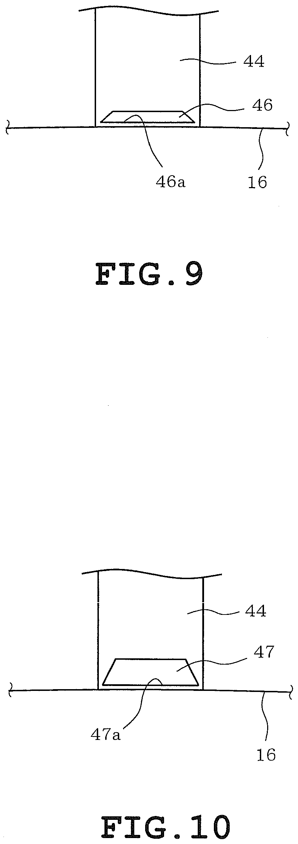

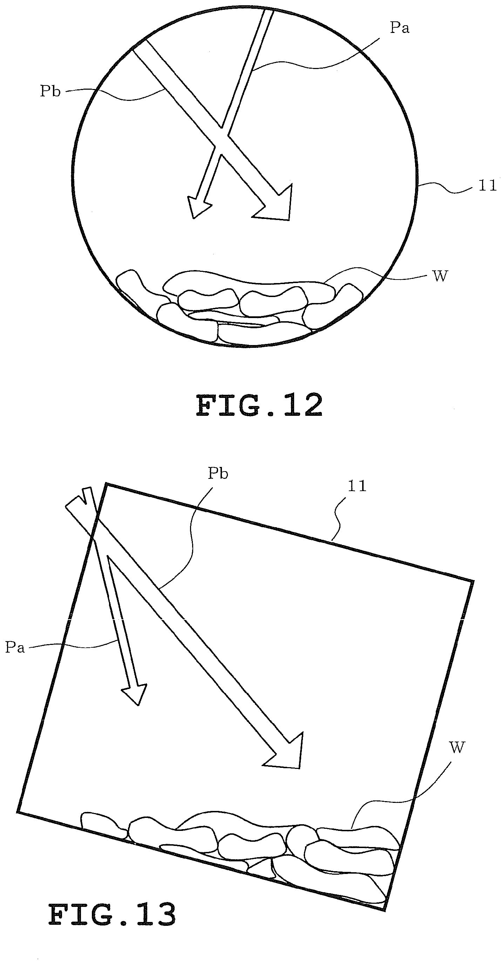

The watering mechanism 28 will now be described with reference to FIGS. 4 to 10. The watering mechanism 28 includes two protrusions formed integrally with a substantially outer circumferential top of the water tub cover 16 and a closing plate 44 which is attached (welded) to distal ends of the protrusions 42 thereby to define a water path 43, as shown in FIGS. 1, 4 and 5. A connection 45 (see FIG. 5) is formed in a left part of the water tub cover 16 (a right part as viewed in FIG. 4) so as to communicate with the water path 43. The water hose 27 is connected to the connection 45. A first water outlet 46 (see FIG. 7) is formed together with the closing plate 44 so as to be located above the connection 45 of the water tub cover 16. A second water outlet 47 (see FIG. 8) is formed in a part of the water tub cover 16 located opposite the first water outlet 46 (a right part as viewed in FIG. 2) together with the closing plate 44. The second water outlet 47 has a diffuser panel 47a facing the interior of the drum 11. The first and second water outlets 46 and 47 are disposed so that a water path Pa through which water from the first water outlet 46 flows has a point of fall of water located at the front side in the drum 1 and so that a water path Pb through which water from the second water outlet 47 flows has a point of fall of water located nearer the rear side than the point of fall of water from the first water outlet 46, as shown in FIGS. 12 and 13. Furthermore, the first and second water outlets 46 and 47 are formed so that the second water outlet 47 has a larger opening than the first water outlet 46 such that the second water outlet 47 has a larger discharge flow rate than the first water outlet 46, as shown in FIGS. 9 and 10. Additionally, the second water outlet 47 is formed with a water flow hole 47b through which wash liquid is splashed to a rear glass 3a of the door 3, as shown in FIG. 8. As a result, bubbles adherent on the rear glass 3a are caused to flow away with the water splashed from the water flow hole 47b of the second water outlet 47.

FIG. 11 shows an electrical arrangement of the drum type washing machine. A control device 5 is mainly constituted by a microcomputer and controls an overall operation of the drum type washing machine. To the control device 5 are supplied various operation signals from an operation section 48 comprising various keys (switches) provided on an operation panel 4 (see FIG. 1), a water level detection signal from the water level sensor 32, a bubble detection signal from the bubble sensor 40, a speed detection signal from a rotation sensor 49 which detects a rotational speed of the washing machine motor 8, a speed detection signal from a rotation sensor 50 which detects a rotational speed of the pump motor 25a, a current detection signal from a current transformer 51 which detects current of the pump motor 5 and the like.

The control device 5 controls the water supply valve 34, the drain valve 23, the washing machine motor 8 and the pump motor 25a, based on the aforementioned input signals and a stored control program. In this case, the control device controls a rotational speed of the washing machine motor 8 by a pulse width modulation (PWM) system with the use of an inverter. Furthermore, the control device 5 controls a display 52 comprising a liquid crystal panel, for example and mounted on the operation panel 4, so that an amount of detergent according to the laundry weight detection as will be described later is displayed on the display 52. The control device 5 controls the display 52 so that a set operation course, a leftover operation time, a reserved time, current time and the like are displayed on the display 52.

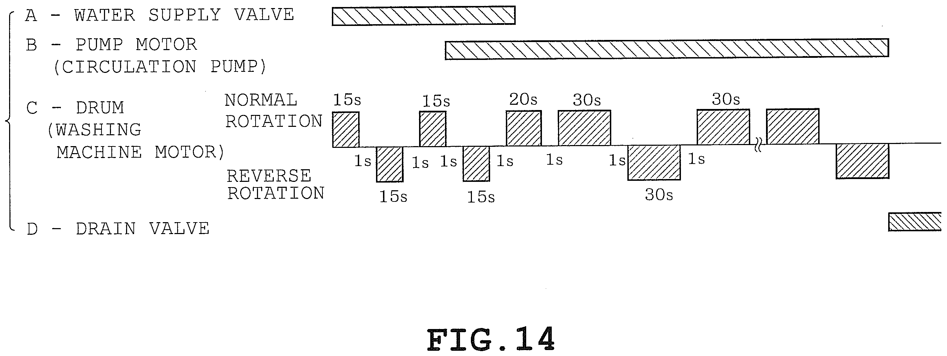

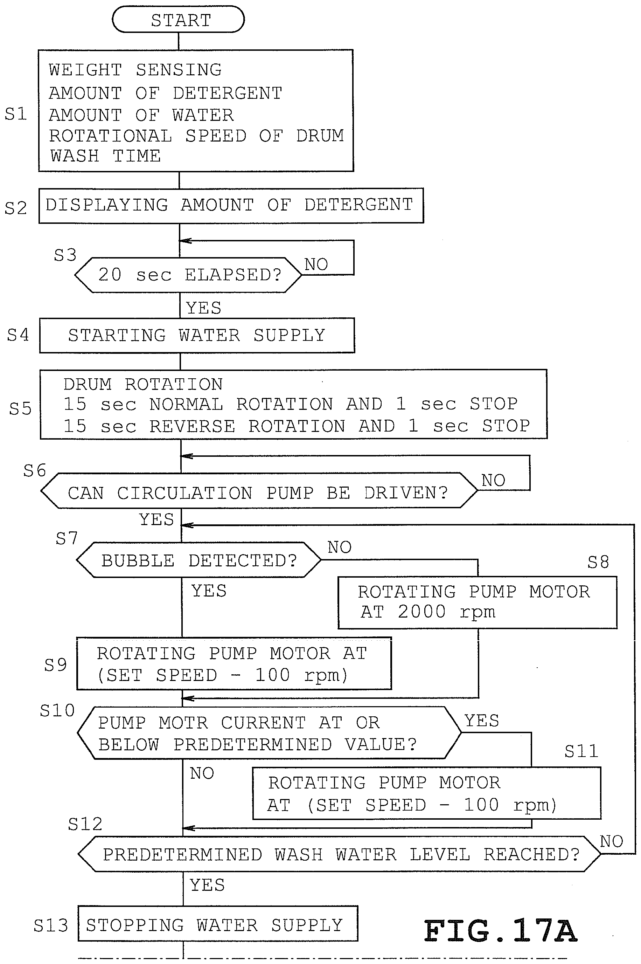

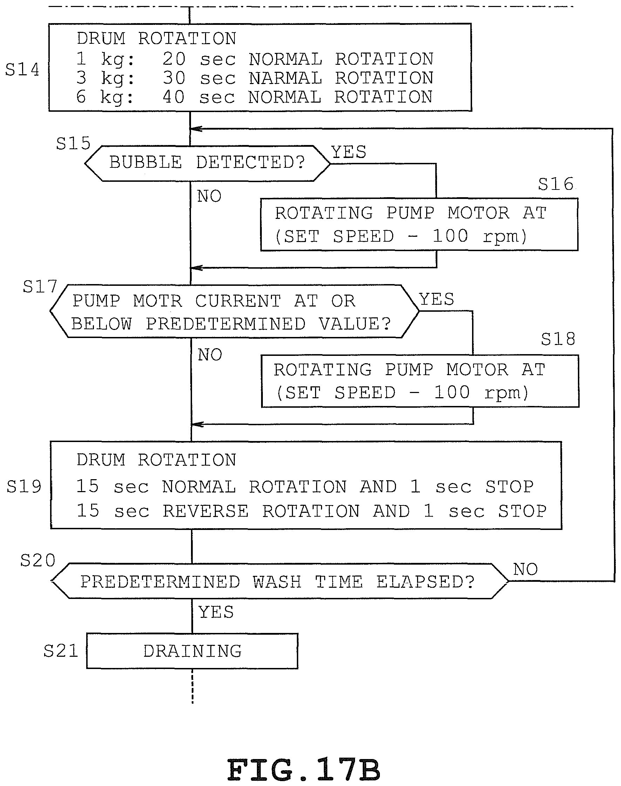

The operation of the above-described construction will now be described with reference to time charts of FIGS. 14 to 16 and a flowchart of FIG. 17. For example, when a user operates the operation panel 4 to select a normal operation course (a course in which steps of wash, rinse and dehydration are executed) and operates a start key on the operation panel 4, the control device 5 starts the operation of the washing machine. Firstly, the control device 5 detects the weight of laundry (clothes), based on a signal supplied from the operation section 48 (processing step S1 in FIG. 17). In the detection of the laundry weight, the control device 5 carries out an operation based on a time required for a rotational speed of the washing machine motor 8 to be increased to a predetermined rotational speed. Thereafter, the control device 5 stops the drum 11 driven by the washing machine motor 8 so that the drum 11 is caused to rotate by inertia, whereby the control device 5 carries out an operation based on a time required to decrease the rotational speed of the drum 11 to a predetermined rotational speed. More specifically, the control device 5 detects the weight of laundry based on a rotational load applied to the washing machine motor 8. Subsequently, the control device 5 determines an amount of detergent, a water level according to the laundry weight in the wash step and a rotational speed of the drum 11 from the results of detection of the aforementioned laundry weight. In this case, a rotation sensor 49 detecting a rotational speed of the washing machine motor 8 functions as a weight detection unit which detects the weight of laundry in the drum 11. The control device 5 then controls the display 52 to display the result of determination of the detergent (an amount of detergent determined according to the laundry weight) (processing step S2 in FIG. 17).

The control device 5 detects the weight of laundry (an amount of load) in three levels of "small" (1 kg, for example), "middle" (3 kg, for example) and "large" (6 kg, for example) . The control device 5 selects one of time charts shown in respective FIGS. 14, 15 and 16 according to a detected level.

The control device 5 is on standby for a predetermined time (20 sec., for example) when the user puts a displayed amount of detergent into the water supply case 35, based on the amount of detergent displayed on the display 52 (processing step S3 in FIG. 17). The control device 5 then opens the water supply valve 34 after lapse of a predetermined time so that tap water is supplied until the water level determined for the wash step is reached (the water level at which the laundry is soaked in water) . In this case, it is assumed that an amount of detergent according to the result of determination of detergent amount by the control device 5 has already been put into the detergent reservoir of the water supply case 35. The drum 11 is mounted so as to be rotatable about the axis line of the water tub 6 having the rearwardly descending central axis. Accordingly, supplied water is reserved in the rear side (the rear half) of the drum 11 (the water tub 6), and the drum 11 is rendered shallower as the water goes near the front of the drum 11 (the front half). As a result, almost no water or a smaller amount of water than in the rear side of the drum 11 is reserved in the interior near the front of the drum 11.

The control device 5 drives the washing machine motor 8 to rotate the drum 11 upon start of water supply (see processing step S5 in FIG. 17 and FIGS. 14-C to 16-C). In a rotation period of the drum 11 at the time of start of water supply, the drum 11 is rotated at a low speed (40 to 60 rpm, for example) in the normal direction for 15 seconds. The drum 11 is then stopped for 1 second and subsequently rotated at the low speed (40 to 60 rpm, for example) in the reverse direction for 15 seconds. The drum 11 is then stopped for 1 second.

Subsequently, when the water level detected by the water level sensor 32 indicates a water level at which the circulation pump 25 can be driven (YES at processing step S6 in FIG. 17), the control device 5 determines whether or not the bubble sensor 40 has detected a predetermined amount of bubbles (determination step) . According to the result of determination at step S6, the control device 5 proceeds to treatment step S8 or S9 to rotate the pump motor 25a thereby to drive the circulation pump 25 (see FIGS. 14-B to FIG. 16-B) . In this case, when an amount of bubbles detected by the bubble sensor 40 is less than a predetermined amount (NO at determination step S7), the control device 5 rotates the pump motor 25a at a set speed (2000 rpm, for example) thereby to drive the circulation pump 25 (processing step S8). On the other hand, when the amount of bubble detected by the bubble sensor 40 is not less than the predetermined amount (YES at determination step S7), the control device 5 rotates the pump motor 25a at a speed (2000 rpm - 100 rpm, for example) obtained by sequentially subtracting a predetermined speed (100 rpm, for example) from the currently set speed (2000 rpm, for example) thereby to drive the circulation pump 25 (processing step S9) .

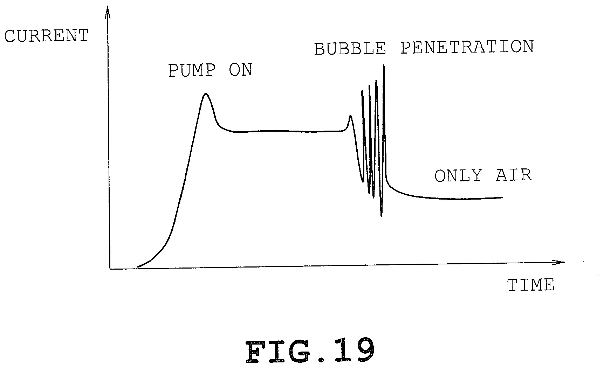

The control device 5 further measures a detection current value of the current transformer 51 to determine whether or not air entrainment has occurred in the circulation pump 25 (determination step S10 in FIG. 17). Wash liquid containing dissolved detergent and supplied into the water tub 6 (the drum 11) is agitated by the laundry which is scooped upward and then falls downward, and circulated by the circulation pump 25, whereupon bubbles are produced. When an amount of bubble is excessive, the washing effect is reduced and the circulation pump 25 may be damaged. When an excessive amount of bubbles is produced in the water tub 6 and enters into the circulation pump 25, the current value of the pump motor 25a varies to a large degree and thereafter becomes substantially constant at a value equal to or lower than a predetermined value, as shown in FIG. 19. The control device 5 determines whether or not air entrainment has occurred in the circulation pump 25, based on the above-mentioned variations in the current value of the pump motor 25a (determination step S10 in FIG. 17).

When determining that air entrainment has occurred in the circulation pump 25 (YES at determination step S10), the control device 5 changes the current set speed of the pump motor 25a to a speed obtained by subtracting a predetermined speed (100 rpm, for example) from the current set speed (processing step S11 in FIG. 17), thereafter proceeding to a next determination step S12. When determining that no air entrainment has occurred in the circulation pump 25 (NO at determination step S10), the control device 5 directly proceeds to the determination step S12.

When having proceeded to the determination step S12, the control device 5 determines whether or not the water level detected by the water level sensor 32 has reached the predetermined water level for the wash step set at processing step S1. When the detected water level has not reached the predetermined water level (NO at determination step S12), the control device 5 returns to determination step S7. On the other hand, when the detected water level has reached the predetermined water level (YES at determination step S12), the control device 5 closes the water supply valve 34 to stop water supply (processing step S13). Subsequently, the control device 5 controls the washing machine motor 8 to drive the drum 11 in the normal and reverse directions alternately, thereby executing a substantial wash step (determination step S14).

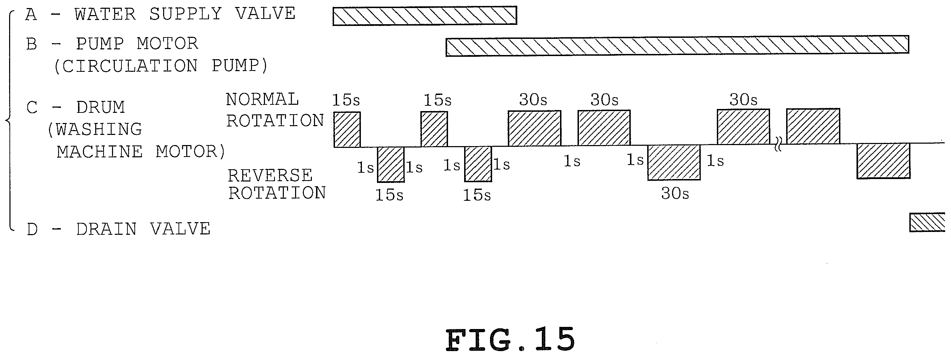

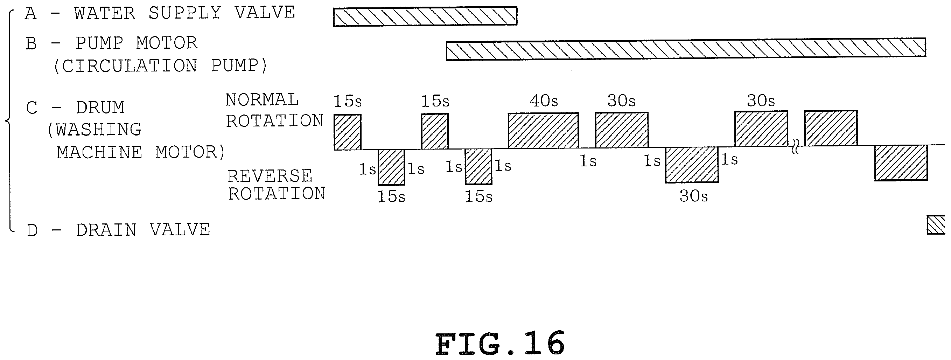

The control device 5 rotates the drum 11 at a low speed (40 to 60 rpm, for example) in the normal direction for a time period according to the weight of laundry at an initial stage of the wash step. More specifically, when the laundry weight is small (1 kg, for example), the control device 5 rotates the washing machine motor 8 in the normal direction for 20 seconds (see FIG. 14-C). When the laundry weight is middle (3 kg, for example), the control device 5 rotates the washing machine motor 8 in the normal direction for 30 seconds (see FIG. 15-C). When the laundry amount is large (6 kg, for example), the control device 5 rotates the washing machine motor 8 in the normal direction for 40 seconds (see FIG. 16-C). In other words, the control device 5 selects the normal direction as the rotational direction of the drum 11 and changes the time period of rotation in the normal direction according to the laundry weight in the initial stage of the wash step, thereby changing an amount of rotation of the drum 11.

The above-described operation is executed so that a beat wash manner is repeated in which laundry accommodated in the drum 11 is scooped upward by the baffles 13 and then caused to fall downward. Furthermore, the control device 5 drives the circulation pump 25 during the wash step as described above. As a result, the water in the water tub 6 is taken out of the drain outlet 18 of the water tub 6 to be supplied in a showering manner from the first and second water outlets 46 and 47 of the watering mechanism 28 mounted in the upper opening of the water tub 6 toward the front and rear sides of the drum 11.

Subsequently, the control device 5 executes the determination step S15, the processing step S16, the determination step S17 and the processing step S18 all of which are similar to the aforementioned determination step S7, the processing step S9, the determination step S10 and the processing step S11 respectively. The control device 5 subsequently executes a normal operation to drive the washing machine motor 8 in the normal direction for 30 seconds, to stop the washing machine motor 8 for 1 second, to drive in the reverse direction for 30 seconds and to stop the washing machine motor 8 for 1 second, repeatedly (processing step S19).

The control device 5 then determines whether or not the set time for the wash step has elapsed. When determining that the set time has not elapsed (NO at determination step S20), the control device 5 returns to determination step S15. On the other hand, when determining that the set time has elapsed (YES at determination step S20), the control device 5 opens the drain valve 23 so that the wash liquid in the water tub 6 is discharged through the drain outlet 18, the inner drain hose 19, the filter case 20 (the lint filter), the drain valve 23, the drain pipe 24 and the outer drain hose (processing step S21 in FIG. 17).

The control device 5 subsequently executes a rinse step. In the rinse step, the control device 5 repeats a water supply operation, a rinse operation and a drain operation all executed in the same manners as in the wash step. The control device 5 then executes a dehydration operation. In the dehydration operation, the control device 5 rotates the drum 11 in one direction at a high speed (700 to 1500 rpm, for example) thereby to execute a centrifugal dehydration for the laundry. The normal operation course (washing operation) ends upon completion of the dehydration operation.

FIGS. 12 and 13 illustrate clothes W as laundry in the initial stage of the wash step of the washing operation. When the drum 11 is rotated in the direction of arrow A (the normal rotation), the clothes W are moved along the circumferential side 13A of each baffle 13 from the front side to the rear side (in the direction of arrow Y in FIG. 3), while being scooped upward by each baffle 13. In this case, since the rear side of each baffle 13 is formed with the second recess 13F, the clothes W are not moved to the rear end side beyond the second recess 13F even upon rotation of the drum 11, thereby remaining in the second recess 13F. Furthermore, the second recess 13F is located in the rear half of each baffle 13. Accordingly, when moved near the uppermost location in the drum 11 with rotation of the drum 11, the clothes W remaining in each recess 13F are caused to fall downward to the rear half interior of the drum 11 by the self-weight thereby to be washed in the beat wash manner. Since a large amount of water is stored in the rear half interior of the drum 11, the water easily penetrates into the clothes W. In this case, the drum 11 is set so that an amount of normal rotation (a rotation time) thereof is rendered larger as an amount of clothes W (weight) is large. Thus, as an amount (weight) of clothes W is large, the clothes W are moved nearer the rear side of the drum 11 thereby to fall downward to the rear interior where a large amount of water is stored. As a result, dissolution of a detergent in the water is enhanced, and the wash liquid can easily penetrate into the clothes W. Moreover, amounts of water sprinkled from the first and second water outlets 46 and 47 are set so that an amount of water sprinkled from the second water outlet 47 is larger than an amount of water sprinkled from the first water outlet 46. Consequently, the wash liquid can uniformly penetrate into the entire clothes W.

Furthermore, the clothes W having been scooped upward with rotation of the drum 11 fall downward along the discharging direction of the water discharged from the second water outlet 47 (the water path Pb). Hence, a contact time of the clothes W with the water discharged from the water outlet 47 is increased such that the water can more easily penetrate into the clothes W.

When the drum 11 is subsequently rotated in the direction of arrow B (reverse rotation), the clothes W are moved from the rear to the front side (in the direction of arrow B in FIG. 3) along the side surface 13B of each baffle 13, while being scooped upward by each baffle 13. Since the front half of each baffle 13 is formed with the first recess 13E, the clothes W remain in the first recess 13E without being moved forward from the first recess 13E even when the drum 11 is rotated. Furthermore, since the first recess 13E is located on the front half of each baffle 13, the clothes W remaining in the first recess 13E are moved near the top position in the drum 11 interior with rotation of the drum 11, being caused to fall downward onto the front half of the drum 11 by the self-weight thereby to be washed in the beat wash manner. Since there is almost no water in the front half interior of the drum 11, the water can easily be extracted from the clothes W.

According to the above-described embodiment, the watering mechanism 28 of the circulation path 30 has the first water outlet 46 from which water is sprinkled in the front side interior of the drum 11 and the second water outlet 47 from which water is sprinkled in the rear interior of the drum 11. A flow rate of water from the second water outlet 47 is set to be larger than that of the first water outlet 46. As a result, the wash liquid can uniformly penetrate into the clothes W, whereby a sufficient effect of the beat wash manner can be achieved and the washing and rinsing operations can efficiently be carried out.

Furthermore, the first and second water outlets 46 and 47 are configured so that the water discharged from the first water outlet 46 has the point of fall of water located at the front side in the drum 1 and the water discharged from the second water outlet 47 has the point of fall of water located nearer the rear side than the point of fall of water of the first water outlet 46. Accordingly, even when the laundry tends to be unevenly distributed in the drum 11, the wash liquid can uniformly penetrate into the entire laundry. Additionally, a further sufficient effect of the beat wash manner can be achieved and the washing and rinsing operations can be carried out further efficiently.

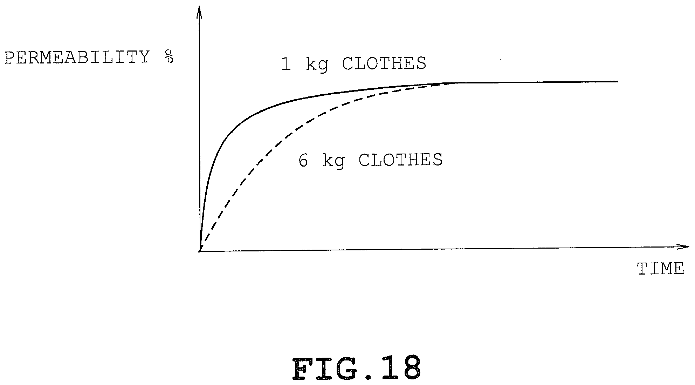

Furthermore, the washing machine is set so that an amount of rotation of the drum 11 in the normal direction (a rotation time) is rendered larger in the initial stage of the wash step as an amount of clothes W becomes large. Hence, as an amount of clothes W becomes large, the clothes W are moved to the rear side in the drum 11 more reliably and fall downward into the rear side interior of the drum 11 where a larger amount of wash liquid is stored. Consequently, dissolution of detergent into the water is enhanced and the wash liquid can easily penetrate into the clothes W. FIG. 18 shows that a penetration ratio of wash liquid into the clothes W is rendered lower as the weight of the clothes W becomes large. Accordingly, increasing the time of normal rotation with increase in the weight of the clothes W has an advantageous effect for the purpose of causing wash liquid to penetrate into the clothes W.

Furthermore, the control device 5 controls the pump motor 25a so that the predetermined speed is sequentially subtracted from the current set speed of the pump motor 25a driving the circulation pump 25 when a detection amount of bubble detected by the bubble sensor 40 is not less than the predetermined amount. More specifically, when a detection amount of bubbles detected by the bubble sensor 40 is not less than the predetermined amount, the control device 5 reduces an amount of water circulated by the circulation pump 25. This can prevent production of an excessive amount of bubbles in the drum 11 and accordingly reduction in the washing effect.

Furthermore, when determining that air entrainment has occurred in the circulation pump 25 from the measurement of the detection current value of the current transformer 51, the control device 5 changes the set speed of the circulation pump 25a to a speed obtained by subtracting the predetermined speed from the current set speed. More specifically, when determining the occurrence of air entrainment in the circulation pump 25 based on the detection current value of the current transformer 51, the control device 5 controls the circulation pump 25 so that an amount of circulated water is reduced. Consequently, the circulation pump 25 can be prevented from damage.

Additionally, the control device 5 may execute the determination step S15 or the determination step S17 repeatedly thereby to stop the pump motor 25a when the rotational speed of the pump motor 25a has been reduced to a lower limit or below. This can prevent a useless continuation of control.

### Second Embodiment

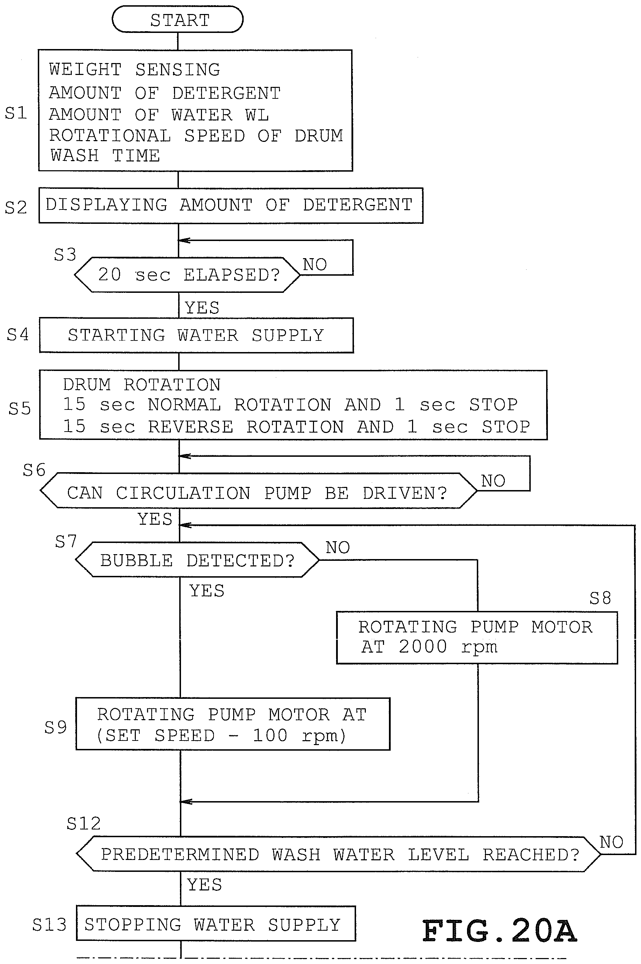

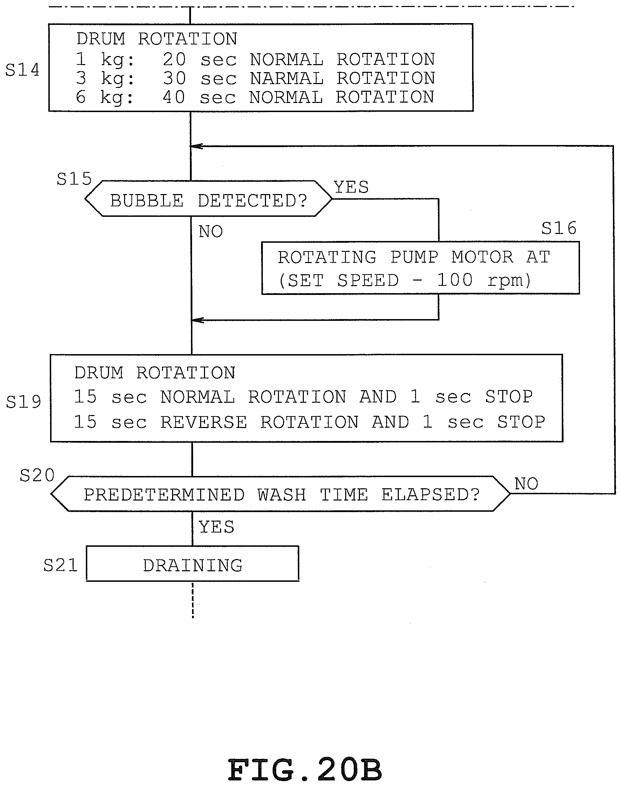

FIG. 20 shows a second embodiment, in which identical parts are labeled by the same reference symbols as those in the above-described first embodiment (FIG. 17). The second embodiment omits the determination step S10, the processing step S11, the determination step S17 and the processing step S18 all regarding the current transformer 51 (see FIG. 11). In other words, the second embodiment presents an arrangement with the current transformer 51 being eliminated.

### Third Embodiment

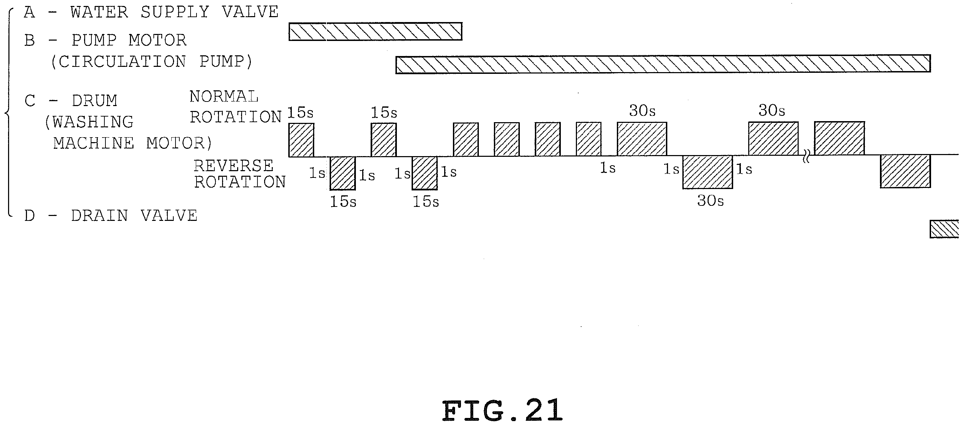

FIG. 21 shows a third embodiment, in which identical parts are labeled by the same reference symbols as those in the above-described first embodiment (FIGS. 14 to 16). The third embodiment presents the initial stage of the wash step in which the normal rotation time (20 sec., 30 sec. or 40 sec.) of the drum 11 (see FIGS. 1 and 2) set according to the laundry weight (small, middle or large) is divided into a plurality of normal rotation times and stop times in execution. This configuration can limit occurrence of bubbles as much as possible.

### Fourth Embodiment

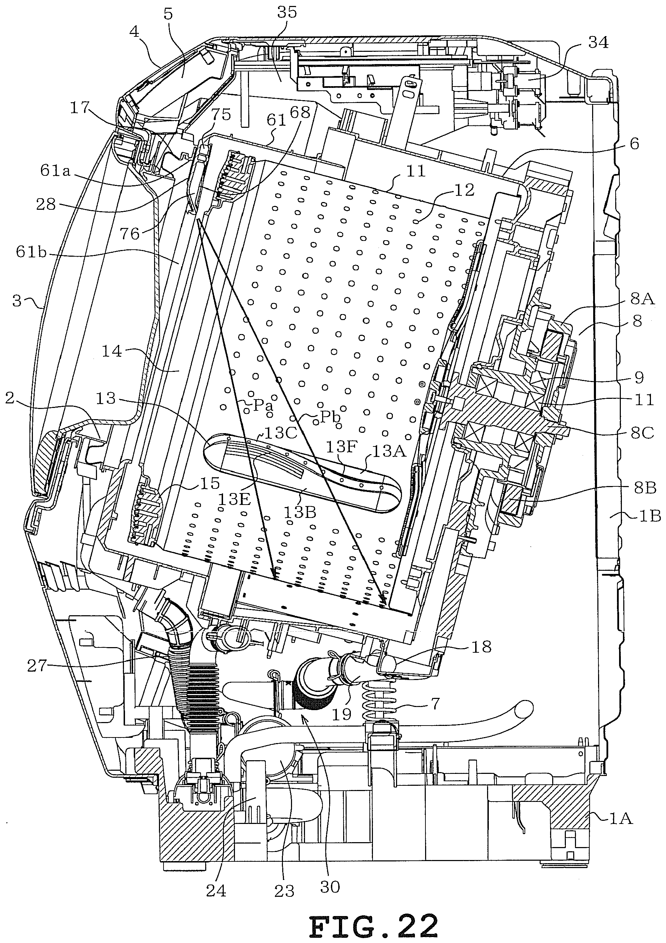

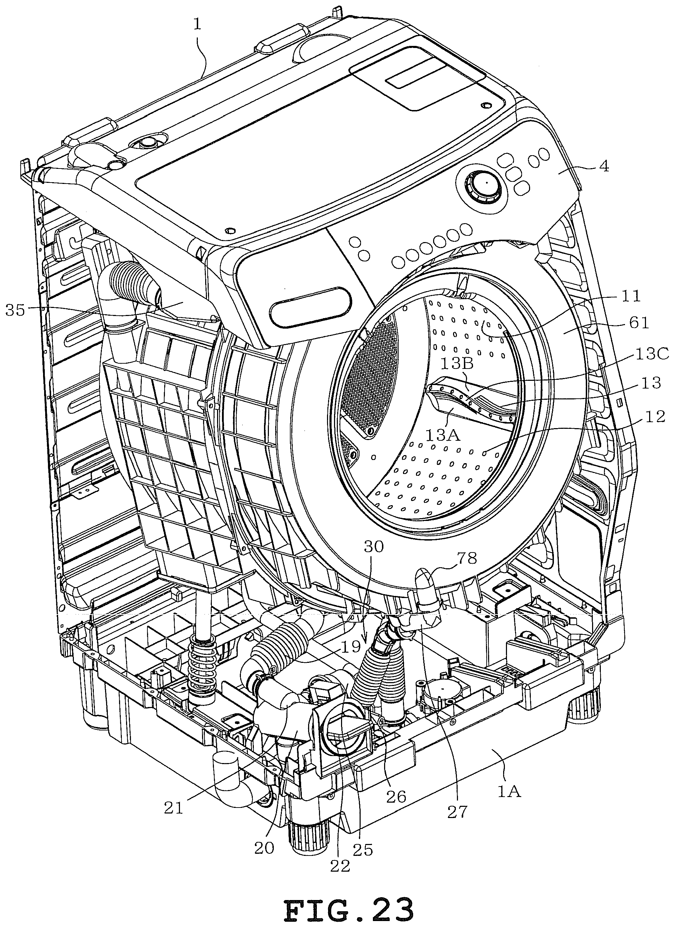

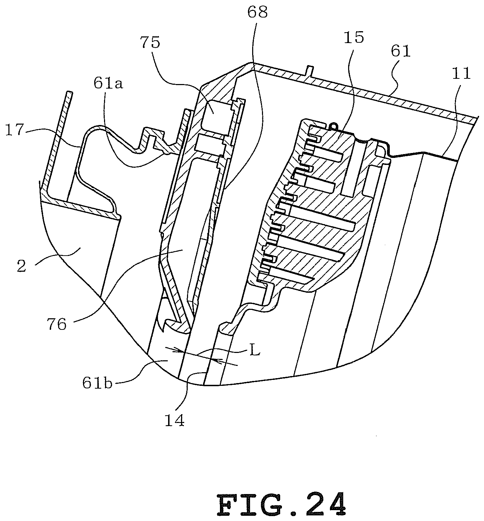

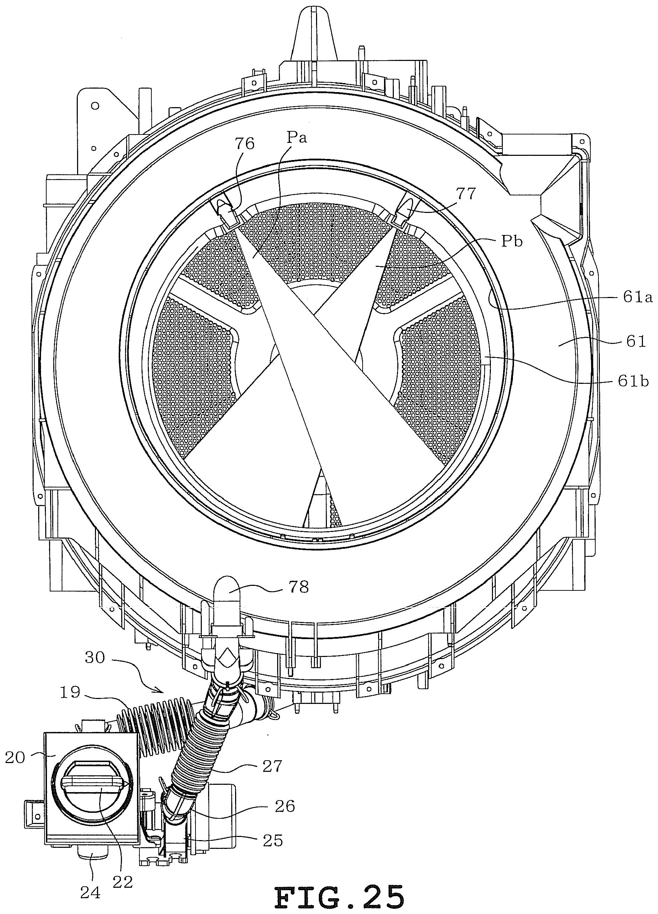

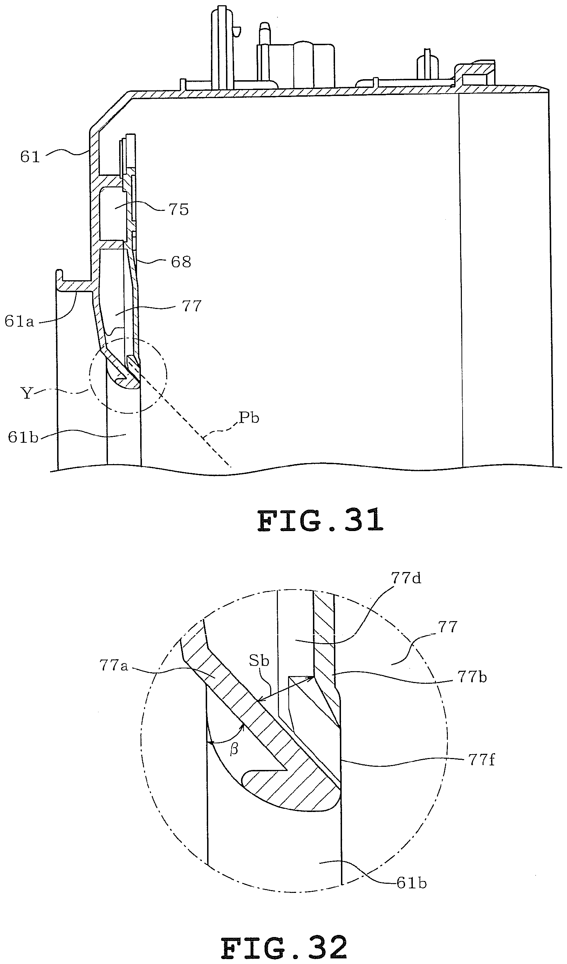

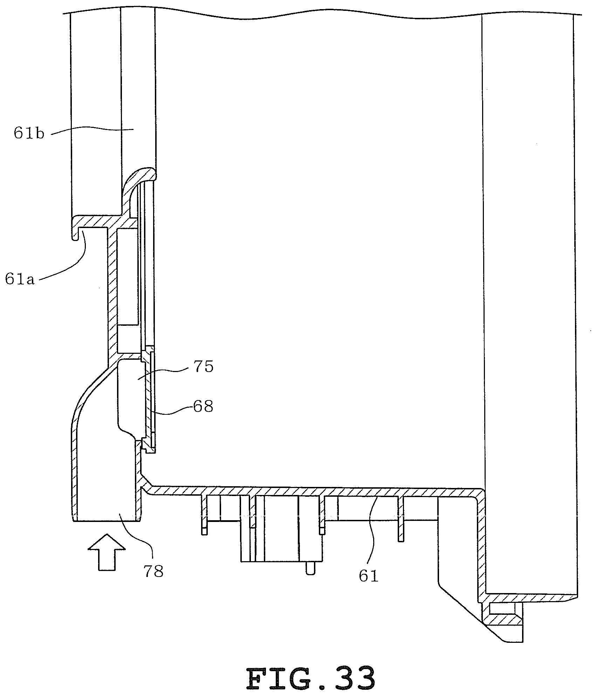

A fourth embodiment will now be described with reference to FIGS. 22 to 33. FIGS. 22 and 23 each illustrate an entire structure of the drum type washing machine. The shown drum type washing machine has the same basic construction as those of the above-described embodiments although differing in the configuration of the outer cabinet 1 and the like from that of the above-described embodiment. The following will describe the construction of the watering mechanism 28 with reference to FIGS . 24 to 33.

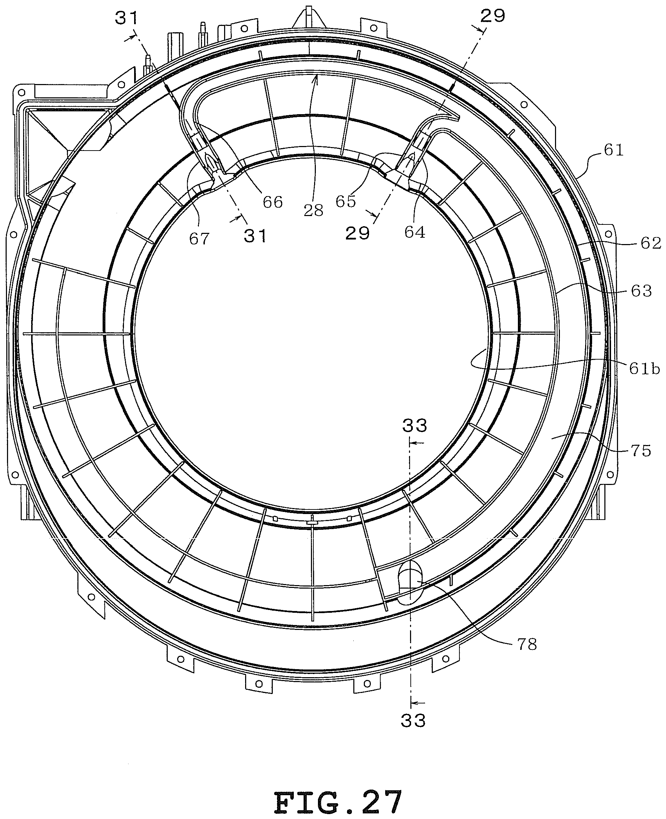

A water tub cover 61 made from a synthetic resin has water-path forming arc-shaped ribs 62 and 63 which are formed integrally with an outer circumference of the rear thereof so as to extend substantially from a lower part to an upper half part of the water tub cover with a predetermined spacing therebetween, as shown in FIG. 27. The ribs 62 and 63 are connected together at the lower part of the water tub cover 61. The water tub cover 61 also has first nozzle forming ribs 64 and 65 which are formed integrally therewith so as to be oriented toward the center of the water tub cover 61 and so as to occupy respective positions shifted clockwise on an upper part of the rear of the water cover 61 (positions clockwise shifted 30 degrees with respect to a vertical line, for example) as viewed in FIG. 27. A space defined between the ribs 64 and 65 communicates with a space defined between the ribs 62 and 63. The water tub cover 61 further has second nozzle forming ribs 66 and 67 which are formed integrally therewith so as to be oriented toward the center of the water tub cover 61 and so as to occupy respective positions shifted counter-clockwise on the upper part of the rear of the water cover 61 (positions counter-clockwise shifted 30 degrees with respect to a vertical line, for example), as viewed in FIG. 27. A space defined between the ribs 66 and 67 communicates with the space defined between the ribs 62 and 63.

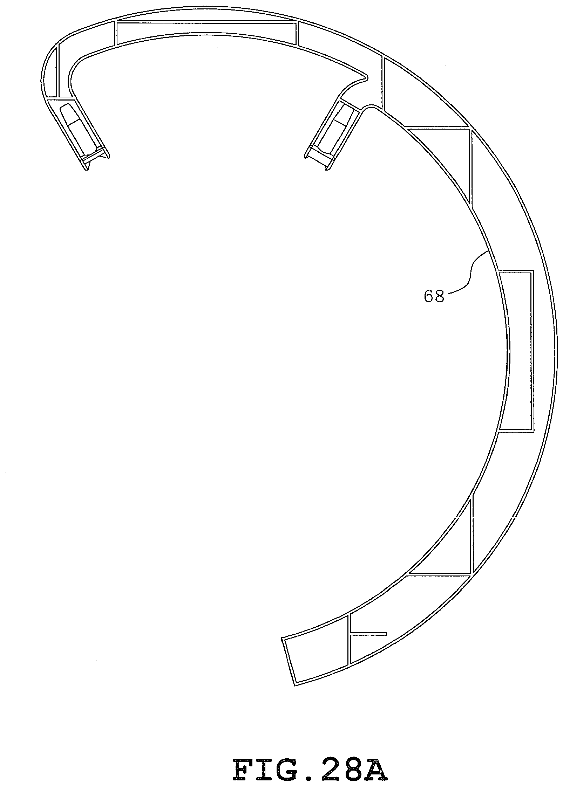

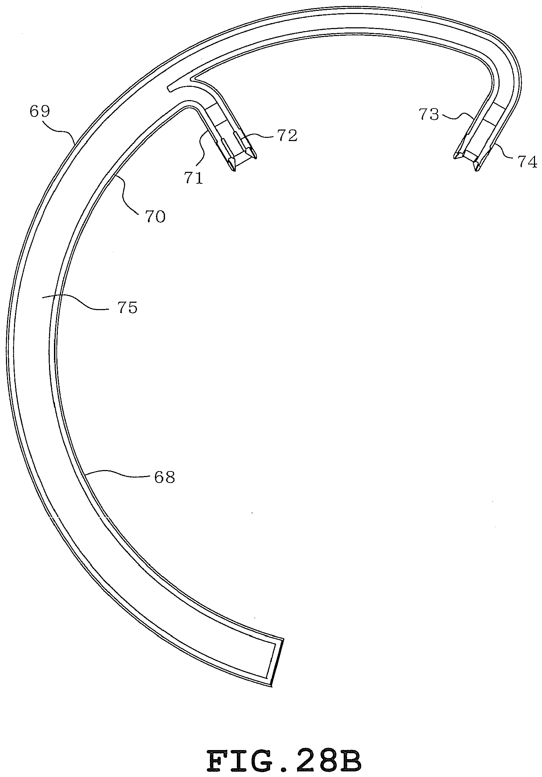

A water pouring cover 68 is formed into an arc shape from a synthetic resin in the same manner as the ribs 62 and 63 of the water tub cover 61, as shown in FIGS. 28A and 28B. The water pouring cover 68 has water-path forming ribs 69 and 70 which are formed integrally with inner and outer circumferential parts of the water tub cover 61 so as to correspond to the ribs 62 and 63, respectively. The ribs 69 and 70 are connected together in respective lower portions. The water pouring cover 68 still further has first nozzle forming ribs 71 and 72 which are formed integrally therewith and correspond to the ribs 64 and 65 and second nozzle forming ribs 73 and 74 which are formed integrally therewith and correspond to the ribs 66 and 67. A space between the ribs 71 and 72 and a space between the ribs 73 and 74 communicate with the space between the ribs 69 and 70. The water tub cover 61 has a front opening 61a communicates via a bellows 17 (see FIG. 22) with the laundry access opening 2 in a watertight manner.

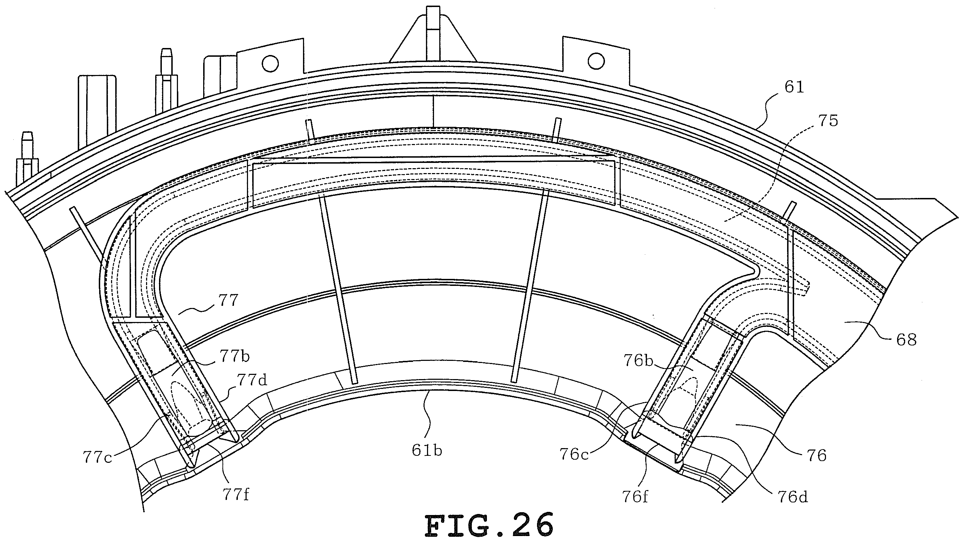

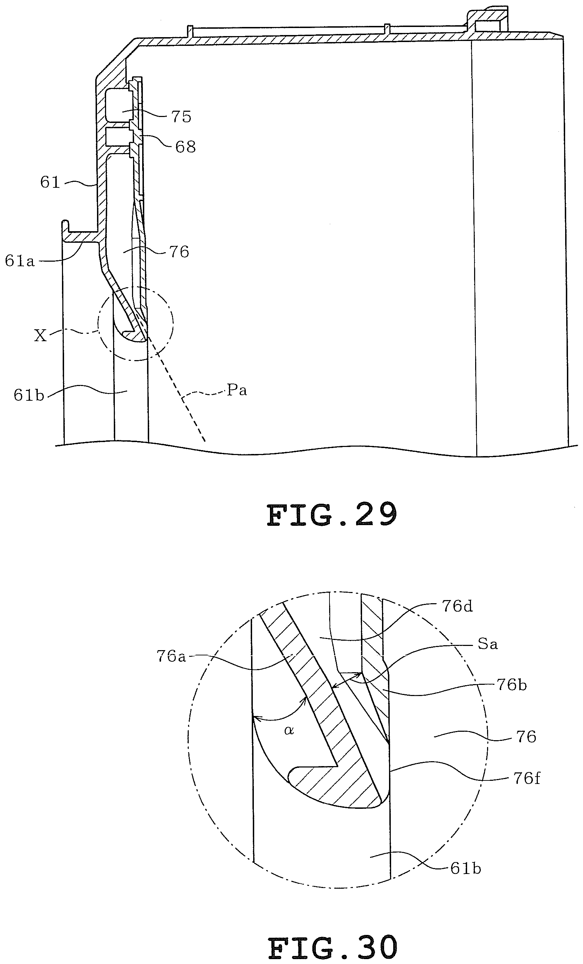

The water pouring cover 68 is disposed in the rear of the water tub cover 61. The ribs 69 and 70 are butted against the ribs 62 and 63, the ribs 71 and 72 are butted against the ribs 64 and 65, and the ribs 73 and 74 are butted against the ribs 66 and 67, respectively. These ribs are ultrasonically welded together, for example so that a first water path 75, a first nozzle 76 and a second nozzle 77 are formed as shown in FIGS. 26 and 29 to 32. The watering mechanism 28 is thus constructed. FIGS. 29 to 32 show the state where the cover 68 has been welded, for the convenience of explanation.

The first nozzle 76 includes a base wall 76a oriented obliquely downward, a guide wall 76b corresponding to the base wall 76a and two sidewalls 76c and 76d connecting between both sides of the base wall 76a and guide wall 76b, as shown in FIGS. 26, 29 and 30. As the result of the above-described construction, the first nozzle 76 is formed with an opening 76f which faces the interior of the drum 11 and has a generally horizontally long rectangular slit-like shape. A discharge flow rate of the first nozzle 76 is set by a minimum spacing Sa between the base wall 76a and the guide wall 76b corresponding to the base wall 76a. Furthermore, the point of fall of water of the water path Pa through the first nozzle 76 is set based on an inclination angle α that is an orientation angle of the base wall 76a and the guide wall 76b.

The second nozzle 77 includes a base wall 77a oriented obliquely downward, a guide wall 77b corresponding to the base wall 77a and two sidewalls 77c and 77d connecting between both sides of the base wall 77a and guide wall 77b, as shown in FIGS. 26, 31 and 32. As the result of the above-described construction, the second nozzle 77 is formed with an opening 76f which faces the interior of the drum 11 and has a generally horizontally long rectangular slit-like shape. A discharge flow rate of the second nozzle 77 is set by a minimum spacing Sb between the base wall 77a and the guide wall 77b. The spacing Sb is set to be larger than the spacing Sa of the first nozzle 76 (Sb>Sa). Furthermore, a water fall point of the water path Pb through the second nozzle 77 is set based on an inclination angle β that is an orientation angle of the base wall 77b and the guide wall 77b. The inclination angle β is set to be larger than the inclination angle α of the first nozzle 76 (β>α).

The water tub cover 61 has a connecting port 78 which is formed in a left side thereof (a right side thereof as viewed in FIG. 27) with respect to a lowest part thereof as viewed in FIG. 23 and which communicates with the water path 75. The water hose 27 is connected to the water path 75.

The above-described construction will work as follows. The control device 5 drives the circulation pump 25 during the wash step so that wash liquid in the water tub 6 that is taken through the drain outlet 18 of the water tub 6 is discharged so as to be sprayed from the first and second nozzles 76 and 77 of the watering mechanism 28 toward the front and rear sides of the drum 11. The control device 5 thereafter controls the washing machine so that a draining operation and a dehydration operation are executed, thereby finishing the wash step. The control device 5 further controls the washing machine so that a rinse step and dehydration step are executed, thereafter completing a washing operation.

In the above-described embodiment, the water pouring cover 68 is ultrasonically welded to the rear of the water tub cover 61 so that the water path 75 and the first and second nozzles 76 and 77 are formed. The wash liquid from the circulation path 30 is supplied to the water path 75. The wash liquid from the water path 75 is discharged by the first and second nozzles 76 and 77 so as to be sprayed into the drum 11. This can eliminate not only piping such as a conventional external hose but also a part or component, such as a conventional deflection plate, protruding into an access opening 61b of the water tub cover 61. Thus, parts or components can be eliminated which get in the way of laundry put into and taken out of the drum 11.

Furthermore, the watering mechanism 28 comprises two members, that is, the water tub cover 61 and the water pouring cover 68. Thus, the watering mechanism 28 has a smaller number of parts and a simpler structure. Additionally, since the water pouring cover 68 is configured to be welded to the water tub cover 61, these covers 68 and 61 can be treated as a single part after welding, which simplifies the assembly.

The first nozzle 76 includes the base wall 76a oriented obliquely downward, the guide wall 76b corresponding to the base wall 76a and the sidewalls 76c and 76d connecting between both sides of the base wall 76a and guide wall 76b. As the result of the construction, the first nozzle 76 is formed with an opening 76f which faces the interior of the drum 11 and has the horizontally long rectangular slit-like shape. Furthermore, the second nozzle 77 includes the base wall 77a oriented obliquely downward, the guide wall 77b corresponding to the base wall 77a and the sidewalls 77c and 77d connecting between both sides of the base wall 77a and guide wall 77b. The second nozzle 77 is formed with the opening 76f which faces the interior of the drum 11 and has the horizontally long rectangular slit-like shape. As a result, differing from water splattering from a deflection plate as in the prior art, the water sprayed from the first and second nozzles 76 and 77 spreads in a horizontal membrane and in a radial manner. Consequently, the wash liquid can uniformly penetrate into the laundry.

The water sprayed from the first and second nozzles 76 and 77 spreads in a horizontal membrane and in a radial manner as described above. Consequently, the wash liquid sprayed from the first and second nozzles 76 and 77 can be supplied into the drum 11 smoothly through the opening 14 even when a clearance L between the access opening 61b of the water tub cover 61 and the opening 14 of the drum 11 is small (1 cm, for example).

The point of fall of water of the water path Pa through the first nozzle 76 is set based on the inclination angle α that is an orientation angle of the base wall 76a and the guide wall 76b. The point of fall of water of the water path Pb through the second nozzle 77 is set based on the inclination angle β that is an orientation angle of the base wall 77b and the guide wall 77b. The inclination angle β is set to be larger than the inclination angle α of the first nozzle 76 (β>α). As a result, water is discharged from the first nozzle 76 into the drum interior near the front while water is discharged from the second nozzle 77 into the drum interior near the rear. Moreover, an amount of water discharged from the second nozzle 77 is set to be larger than an amount of water discharged from the first nozzle 76. Accordingly, wash liquid can uniformly penetrate into the laundry that is moved by the baffles 13 so as to be biased toward the rear side, whereby a sufficient beat wash effect can be achieved and the wash and rinse operations can be carried out efficiently.

### Fifth Embodiment

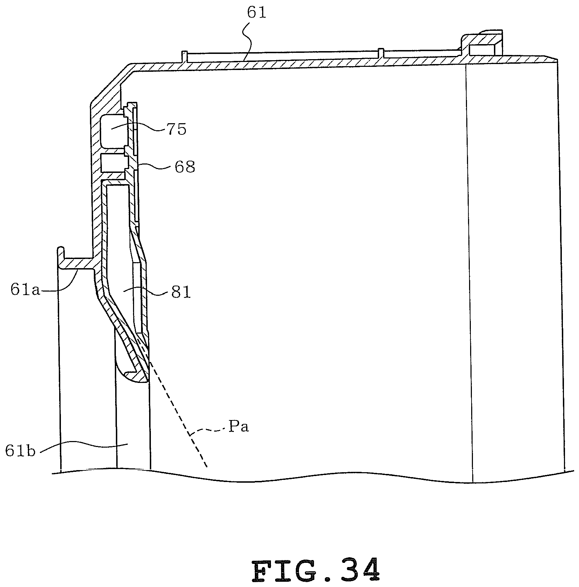

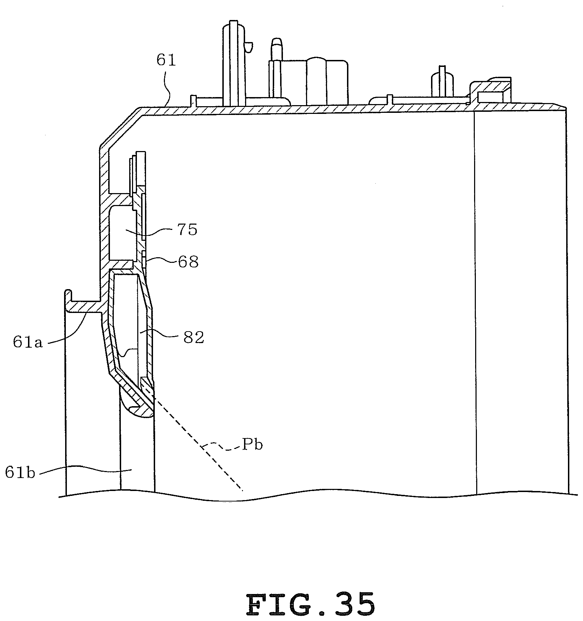

A fifth embodiment will now be described with reference to FIGS. 34 and 35, in which identical parts are labeled by the same reference symbols as those in the above-described fourth embodiment.

Both the water tub cover 61 and the water pouring cover 68 are formed with the first and second nozzles 76 and 77 respectively in the fourth embodiment. In the fifth embodiment, however, the water pouring cover 68 has a first nozzle 81 which is provided instead of the first nozzle 76 and is formed integrally with the cover 68, as shown in FIG. 34. Furthermore, the water pouring cover 68 also has a second nozzle 82 which is provided instead of the second nozzle 77 and is formed integrally with the cover 68, as shown in FIG. 35. The water paths from the connecting port 78 to the nozzles 76 and 77 are formed by the water tub cover 68 and the water pouring cover 68 respectively. The fifth embodiment can achieve the same advantageous effect as the fourth embodiment.

### Other Embodiments

The foregoing embodiments should not be restrictive but may be modified or expanded as follows.

Ordinary linear baffles may be used instead of the above-described baffles 13. The number of baffles 13 may be 3 or above.

In the foregoing embodiments, an amount of rotation of the drum 11 is changed by changing the normal rotation time of the drum 11 according to the weight of laundry at the initial stage of the wash step. However, an amount of rotation of the drum 11 may be changed by a normal rotation speed of the drum 11, instead.

The control device 5 may control a rotational speed of the drum 11 by the washing machine motor 8 so that laundry W falls downward to the side of the point of fall of water regarding the second water outlet 47 with a larger flow rate at the initial stage of the washing operation, instead of controlling a rotational direction of the drum 11 by the washing machine motor 8 so that laundry W falls to the side of the point of fall of water regarding the second water outlet 47 with a larger flow rate.

The control device 5 may control may control a rotational direction of the drum 11 at the initial stage of the washing operation so that laundry W falls in the direction perpendicular to a direction in which water is discharged from the second water outlet 47 with a larger flow rate (the water path Pb), instead of controlling a rotational direction of the drum 11 so that laundry W falls in the watering direction of the second water outlet 47 with a larger flow rate (the water path Pb). As a result, the falling laundry W collides with the water discharged from the second water outlet 47 such that the mechanical force causes the wash liquid to penetrate into the fiber of the laundry W more easily. Consequently, dirt adherent to the laundry W can be removed more easily.

A current sensor may be used as the weight detection unit. More specifically, the control device 5 may determine the weight of laundry accommodated in the drum 11 based on data recorded in the control device 5 and a magnitude of electrical current detected by the current sensor when the washing machine motor 8 has been driven to rotate the drum 11.

The number of the water outlets or nozzles provided in the watering mechanism 28 should not be limited to 2. Three or more water outlets or nozzles may be provided, instead.

The foregoing embodiments may be applied to a drum type washing machine with a drying function.

### Description of Reference Symbols

Reference symbol 1 designates an outer casing, 5 a control device (a control unit), 6 a water tub, 8 a washing machine motor, 11 a drum, 13 baffles, 16 a water tub cover, 18 a drain outlet (a water intake), 25 a circulation pump, 25a a pump motor, 28 a watering mechanism, 30 a circulation path, 43 a water path, 68 a water pouring cover, 46 a first water outlet, 47 a second water outlet, 61 a water tub cover, 75 a water path, 76 a first nozzle, 76a a base wall, 76b a guide wall, 76c and 76d sidewalls, 76f an opening, 77 a second nozzle 77a a base wall, 77b a guide wall, 77c and 77d sidewalls, 77f an opening, 81 a first nozzle and 82 a second nozzle.

## Claims

1. A drum type washing machine including:
an outer casing (1);
a water tub (6) which is formed into a bottomed cylindrical shape with a closed rear side and is elastically supported so that a center axis thereof is located on an axis line descending rearward in the outer casing (1);
a drum (11) which is provided in the water tub (6) so as to be rotatable about the axis line and formed into a bottomed cylindrical shape having a closed rear side, the drum (11) having a circumferential wall with a number of holes (12A, 12B);
a washing machine motor (8) provided on an outer rear surface of the water tub (6) to drive the drum (11) in a normal rotation direction and a reverse rotation direction;
a baffle (13) which is provided on an inner circumference of the drum (11) so as to extend in a front-back direction along the axis line;
a water intake (18) formed in a rear side bottom of the water tub (6);
a first water outlet (46) and a second water outlet (47) both formed in a front side upper portion of the water tub (6);
a circulation path (30) connecting the water intake (18), the first and second water outlets (46, 47) to one another;
a circulation pump (25) which is provided in the circulation path (30) to discharge water supplied from the water intake (18) into the drum (11) through the first and second water outlets (46, 47); and
a control unit (5) which controls the washing machine motor (8) and the circulation pump (25),
wherein the first and second water outlets (46, 47) are configured so that a fall position of water from the second water outlet (47) is located nearer a rear side than a fall position of water from the first water outlet (46); and
the second water outlet (47) has a discharge flow rate that is set to be larger than a discharge flow rate of the first water outlet (46).

2. The washing machine according to claim 1, further **characterised by** a water tub cover (61) attached to a front opening of the water tub (6) and a water pouring cover (68) attached to a rear side of the water tub cover (61), wherein the water tub cover (61) and the water pouring cover (68) define a water path (43, 75), and the first and second water outlets (46, 47) are defined by either one or both of water tub cover (61) and the water pouring cover (68) and is provided so as to communicate with the water path (43, 75) and so as to face the drum (6) interior from above.

3. The washing machine according to claim 1, wherein the control unit (5) controls rotation of the drum (11) by the washing machine motor (8) so that laundry falls to a water fall position side from the second water outlet (47) having the larger discharge flow rate in an initial stage of washing operation.

4. The washing machine according to claim 1, wherein the control unit (5) controls a rotation direction of the drum (11) by the washing machine motor (8) so that laundry falls along a direction of water discharge from the second water outlet (47) having the larger discharge flow rate.

5. The washing machine according to claim 1 or 2, further **characterised by** a weight detection unit (49) which detects a weight of laundry put into the drum (11), wherein the control unit (5) controls an amount of rotation of the washing machine motor (8) according to a weight detected by the weight detection unit (49).

6. The washing machine according to claim 1 or 2, further **characterised by** a bubble amount detection unit (40) which detects an amount of bubbles produced in the drum (11), wherein the control unit (5) controls the circulation pump (25) so that a circulation flow rate of the circulation pump (25) is reduced when an amount of bubbles detected by the bubble amount detection unit (40) is not less than a set amount.

7. The washing machine according to claim 1 or 2, further **characterised by** a current detection unit (51) which detects a motor current of the circulation pump (25), wherein the control unit (5) controls the circulation pump (25) so that a circulation flow rate is reduced when having determined that air entrainment is occurring in the circulation pump (25) based on a current detected by the current detection unit (51).

## Patentansprüche

1. Eine Trommelwaschmaschine, umfassend:
ein Außengehäuse (1);
eine Wasserwanne (6), die zu einer zylindrischen Form mit Boden mit einer geschlossenen Rückseite geformt und elastisch gelagert ist, so dass sich eine Mittelachse davon auf einer nach hinten abfallenden Achsenlinie in dem Außengehäuse (1) befindet;
eine Trommel (11), die in der Wasserwanne (6) vorgesehen ist, um sich um die Achsenlinie zu drehen und zu einer zylindrischen Form mit Boden mit einer geschlossenen Rückseite geformt ist, wobei die Trommel (11) eine umlaufende Wand mit einer Anzahl an Löchern (12A, 12B) aufweist;
einen an einer äußeren Rückseitenfläche der Wasserwanne (6) zum Antrieb der Trommel (11) in einer normalen Rotationsrichtung und einer umgekehrten Rotationsrichtung vorgesehenen Waschmaschinenmotor (8);
einen Mitnehmer (13), der am Innenumfang der Trommel (11) angebracht ist, der sich in einer Vorwärts-/Rückwärtsrichtung entlang der Achsenlinie erstreckt;
einen Wassereinlass (18), der in einem rückseitigen Boden der Wasserwanne (6) eingearbeitet ist;
einen ersten Wasserauslass (46) und einen zweiten Wasserauslass (47), die beide in einem vorderseitigen oberen Bereich der Wasserwanne (6) eingearbeitet sind;
ein Zirkulationssystem (30), das den Wassereinlass (18), den ersten Wasserauslass (46) und einen zweiten Wasserauslass (47) zueinander in Verbindung bringt;
eine Umwälzpumpe (25), die im Zirkulationssystem (30) eingebracht ist, um Wasser aus dem Wassereinlass (18) in die Trommel (11) durch den ersten und den zweiten Wassereinlass (46, 47) zu entladen; und
eine Kontrolleinheit (5), die den Waschmaschinenmotor (8) und die Umwälzpumpe (25) steuert,
wobei der erste und der zweite Wasserauslass (46, 47) so konfiguriert sind, dass sich eine Fallposition des Wassers vom zweiten Wasserauslass (47) näher einer Rückseite als eine Fallposition des Wassers vom ersten Wasserauslass (46) befindet; und
der zweite Wasserauslass (47) eine Durchflussrate aufweist, die größer als die Durchflussrate des ersten Wasserauslasses (46) eingestellt ist.

2. Die Waschmaschine gemäß Anspruch 1, weiter **gekennzeichnet durch** eine Wasserwannenabdeckung (61), die an einer vorderen Öffnung der Wasserwanne (6) angebracht ist und eine Wassereinguss-Abdeckung (68), die an einer Rückseite der Wasserwannenabdeckung (61) angebracht ist, wobei die Wasserwannenabdeckung (61) und die Wassereinguss-Abdeckung (68) einen Wasserpfad (43, 75) definieren, und der erste und der zweite Wasserauslass (46, 47) entweder durch die Wasserwannenabdeckung (61) oder Wassereinguss-Abdeckung (68) oder durch beide definiert wird und dermaßen gestaltet ist, um mit dem Wasserpfad (43, 75) zu kommunizieren und so dem Trommel (6)-Innenraum von oben gegenüber zu stehen.

3. Die Waschmaschine gemäß Anspruch 1, wobei die Kontrolleinheit (5) die Rotation der Trommel (11) durch den Waschmaschinenmotor (8) steuert, so dass die Wäsche auf eine Wasserfallposition von dem zweiten Wasserauslass (47) mit der größeren Durchflussrate in einem Anfangsstadium des Waschvorgangs fällt.

4. Die Waschmaschine gemäß Anspruch 1, wobei die Kontrolleinheit (5) eine Drehrichtung der Trommel (11) durch den Waschmaschinenmotor (8) steuert, so dass die Wäsche entlang einer Richtung des Wasserdurchflusses von dem zweiten Wasserauslass (47) mit der größeren Durchflussrate fällt.

5. Die Waschmaschine gemäß Anspruch 1 oder 2, weiter **gekennzeichnet durch** eine Gewichtsdetektionsseinheit (49), die ein in die Trommel (11) eingebrachtes Wäschegewicht detektiert, wobei die Kontrolleinheit (5) eine bestimmte Umdrehungszahl des Waschmaschinenmotors (8) gemäß dem durch die Gewichtsdetektionseinheit (49) erkannten Gewicht steuert.

6. Die Waschmaschine gemäß Anspruch 1 oder 2, weiter **gekennzeichnet durch** eine Luftblasendetektionseinheit (40), die eine Anzahl von in der Trommel (11) erzeugten Luftblasen detektiert, wobei die Kontrolleinheit (5) die Umwälzpumpe (25) steuert, damit eine Umlaufströmungsrate der Umwälzpumpe (25) reduziert wird, wenn eine bestimmte Anzahl von detektierten Luftblasen durch die Luftblasendetektionseinheit (40) nicht geringer als eine festgelegte Menge ist.

7. Die Waschmaschine gemäß Anspruch 1 oder 2, weiter **gekennzeichnet durch** eine Spannungsdetektionseinheit (51), die eine Motorspannung der Umwälzpumpe (25) detektiert, wobei die Kontrolleinheit (5) die Umwälzpumpe (25) steuert, so dass die Umlaufströmungsrate reduziert wird, wenn festgestellt wird, dass es, basierend auf einer detektierten Spannung durch die Spannungsdetektionseinheit (51), zu einer Luftblasenbildung in der Umwälzpumpe (25) gekommen ist.

## Revendications

1. Une machine à laver à tambour comprenant :
un boîtier externe (1) ;
une cuve à eau (6) qui est formée en une forme cylindrique dotée d'un fond avec un côté arrière fermé et est supportée élastiquement de sorte qu'un axe central de celle-ci est situé sur une ligne d'axe descendant vers l'arrière dans le boîtier externe (1) ;
un tambour (11) qui est prévu dans la cuve à eau (6) de manière à pouvoir tourner autour de la ligne d'axe et formé en une forme cylindrique dotée d'un fond ayant un côté arrière fermé, le tambour (11) ayant une paroi circonférentielle avec un nombre de trous (12A, 12B) ;
un moteur de machine à laver (8) prévu sur une surface arrière externe de la cuve à eau (6) pour entraîner le tambour (11) dans une direction de rotation normale et une direction de rotation inverse ;
un déflecteur (13) qui est prévu sur une circonférence intérieure du tambour (11) de manière à s'étendre dans une direction avant-arrière le long de la ligne d'axe ;
une prise d'eau (18) formée dans un fond latéral arrière de la cuve à eau (6) ;
une première sortie d'eau (46) et une deuxième sortie d'eau (47) toutes deux formées dans une partie supérieure latérale avant de la cuve à eau (6) ;
un trajet de circulation (30) reliant la prise d'eau (18), les première et deuxième sorties d'eau (46, 47) l'une à l'autre ;
une pompe de circulation (25) qui est prévue dans le trajet de circulation (30) pour évacuer l'eau fournie depuis la prise d'eau (18) jusque dans le tambour (11) à travers les première et deuxième sorties d'eau (46, 47) ; et
une unité de contrôle (5) qui contrôle le moteur de la machine à laver (8) et la pompe de circulation (25),
dans laquelle les première et deuxième sorties d'eau (46, 47) sont configurées de sorte qu'une position de chute d'eau depuis la deuxième sortie d'eau (47) est située plus près d'un côté arrière qu'une position de chute d'eau depuis la première sortie d'eau (46) ; et
la deuxième sortie d'eau (47) a un débit d'évacuation qui est réglé pour être supérieur à un débit d'évacuation de la première sortie d'eau (46).

2. La machine à laver selon la revendication 1, **caractérisée en outre par** un couvercle de cuve à eau (61) fixé à une ouverture avant de la cuve à eau (6) et un couvercle de déversement d'eau (68) fixé à un côté arrière du couvercle de cuve à eau (61), dans laquelle le couvercle de la cuve à eau (61) et le couvercle de déversement d'eau (68) définissent un trajet d'eau (43, 75), et les première et deuxième sorties d'eau (46, 47) sont définies soit par l'un des couvercles de la cuve d'eau (61) et de déversement d'eau (68), soit par les deux, et est prévu de manière à communiquer avec le trajet d'eau (43, 75) et de manière à faire face à l'intérieur du tambour (6) depuis le dessus.

3. La machine à laver selon la revendication 1, dans laquelle l'unité de contrôle (5) contrôle la rotation du tambour (11) par le moteur de la machine à laver (8) de sorte que le linge tombe vers un côté de la position de chute d'eau depuis la deuxième sortie d'eau (47) ayant le débit d'évacuation supérieur dans une phase initiale d'opération de lavage.

4. La machine à laver selon la revendication 1, dans laquelle l'unité de contrôle (5) contrôle une direction de rotation du tambour (11) par le moteur de la machine à laver (8) de sorte que le linge tombe le long d'une direction d'évacuation d'eau depuis la deuxième sortie d'eau (47) ayant le débit d'évacuation supérieur.

5. La machine à laver selon la revendication 1 ou 2, **caractérisée en outre par** une unité de détection de poids (49) qui détecte le poids du linge mis dans le tambour (11), dans laquelle l'unité de contrôle (5) contrôle une quantité de rotation du moteur de la machine à laver (8) selon un poids détecté par l'unité de détection de poids (49).

6. La machine à laver selon la revendication 1 ou 2, **caractérisée en outre par** une unité de détection de quantité de bulles (40) qui détecte une quantité de bulles produites dans le tambour (11), dans laquelle l'unité de contrôle (5) contrôle la pompe de circulation (25) de sorte qu'un débit de circulation de la pompe de circulation (25) est réduit lorsqu'une quantité de bulles détectée par l'unité de détection de quantité de bulles (40) n'est pas inférieure à une quantité définie.

7. La machine à laver selon la revendication 1 ou 2, **caractérisée en outre par** une unité de détection de courant (51) qui détecte un courant de moteur de la pompe de circulation (25), dans laquelle l'unité de contrôle (5) contrôle la pompe de circulation (25) de sorte qu'un débit de circulation est réduit après avoir déterminé que l'entraînement d'air se produit dans la pompe de circulation (25) sur la base d'un courant détecté par l'unité de détection de courant (51).
